# EUROPÄISCHE PATENTSCHRIFT

(11) **EP 1 008 232 B1**
(45) Veröffentlichungstag und Bekanntmachung des Hinweises auf die Patenterteilung: **05.11.2003**
(21) Anmeldenummer: 98945287.5
(22) Anmeldetag: 25.08.1998
(51) Int. Cl.: H02P 3/04

(54) **VERFAHREN UND SCHALTUNGSANORDNUNG ZUM BETRIEB EINER ELEKTROMAGNETISCH BETÄTIGBAREN, MECHANISCHEN BREMSE EINES ELEKTROMOTORS**
METHOD AND CIRCUIT ARRANGEMENT FOR OPERATING AN ELECTROMAGNETICALLY ACTUATED MECHANICAL BRAKE OF AN ELECTRIC MOTOR
PROCEDE ET CIRCUIT POUR LE FONCTIONNEMENT D'UN FREIN MECANIQUE A ACTIONNEMENT ELECTROMAGNETIQUE D'UN MOTEUR ELECTRIQUE

(30) Priorität: 25.08.1997 DE 19736940; 11.09.1997 DE 19740016
(43) Veröffentlichungstag der Anmeldung: 14.06.2000
(73) Patentinhaber: Sew-Eurodrive GmbH & Co. KG, 76646 Bruchsal (DE)
(72) Erfinder: ROTH-STIELOW, Jörg, D-75015 Bretten (DE); SCHMIDT, Josef, D-76676 Graben-Neudorf (DE)
(74) Vertreter: Bohnenberger, Johannes, Dr.
(86) Internationale Anmeldenummer: EP9805395
(87) Internationale Veröffentlichungsnummer: WO99010975

(56) Entgegenhaltungen:
- EP-A- 0 242 671
- EP-A- 0 575 023
- PATENT ABSTRACTS OF JAPAN vol. 013, no. 121 (E-732), 24. März 1989 & JP 63 290179 A (TOSHIBA CORP), 28. November 1988
- PATENT ABSTRACTS OF JAPAN vol. 006, no. 009 (E-090), 20. Januar 1982 & JP 56 132191 A (STAR SEIKI:KK), 16. Oktober 1981

## Beschreibung

Die Erfindung betrifft ein Verfahren und eine Schaltungsanordnung zum Betrieb einer elektromagnetisch betätigbaren, mechanischen Bremse eines Elektromotors, insbesondere eines Getriebemotors.

Elektrische Maschinen, insbesondere Elektromotoren lassen sich sehr gut in ihrer Drehzahl steuern. Um die an sich schon gute Steuerbarkeit zu verbessern, ist es bekannt, mechanische Bremsen vorzusehen, die über eine ElektromagnetAnordnung gelöst bzw. gelüftet werden können. Während des Betriebes des Elektromotors bestromt man eine Erregerspule der elektromagnetisch betätigten, mechanischen Bremse zusammen mit dem Elektromotor. Im unbestromten Zustand wird der Elektromotor aufgrund einer Federkraft, die auf die Bremse wirkt, festgehalten.

Weiterhin ist es bekannt, die Elektromotoren an einem Wechsel- bzw. Drehstromnetz zu betreiben. Bei Verwendung einer mit Gleichstrom zu betreibenden Erregerspule werden daher Umrichter bzw. Gleichrichter eingesetzt. Wegen der weltweit unterschiedlichen Betriebsspannungen von Wechsel- bzw. Drehstromnetzen wird eine Vielzahl von Varianten mit Erregerspulen für unterschiedliche Betriebsspannungen hergestellt und vertrieben. Aus dem gleichen Grund wird auch eine Vielzahl unterschiedlicher Gleichrichter-Schaltungsanordnungen produziert. Um durch größere Produktionszahlen zu einer Kostenreduktion zu kommen, gibt es bereits Bestrebungen, eine unter mehreren weltweit üblichen Spannungsklassen betreibbare Gleichrichter-Schaltungsanordnung einzusetzen. Da sich aber die durch die Schaltungsanordnung erzeugte unipolare Spannung in ihrer Höhe nach der Höhe der Wechselspannung richtet, ist die Erregerspule der elektromagnetisch betätigbaren, mechanischen Bremse jeweils genau an die am Einsatzort verfügbare Netzspannung anzupassen.

Aus der EP 0 575 023 A1 ist eine Ansteuerschaltung für eine Gleichstrom betätigte Bremse eines Elektromotors bekannt. Zum Lüften der Bremse ist ein Elektromagnet mit einer Erregerspule vorgesehen. Die Stromversorgung des Elektromotors ist mit einer Gleichrichterschaltung verbunden, die die Erregerspule in ein Schaltsystem mit elektronischen Schaltelementen für die Erregerspule speist. Weiterhin ist ein Freilaufkreis für die Erregerspule vorhanden. Ein elektronisches Schaltelement für die Erregerspule ist durch das Schaltsystem derart steuerbar, daß beim Einschalten des Elektromotors dieses unter Erzeugung einer Übererregung der Erregerspule voll durchsteuert und nach einer kurzen Zeitspanne zur Herabsetzung der Spulenspannung auf eine vorgewählte Spannung pulsweitenmoduliert gesteuert wird. Im Freilaufkreis der Erregerspule ist ein weiteres elektronisches Schaltelement angeordnet, das parallel mit dem Schaltelement für die Erregerspule von dem System zum schnellen Ein- und Ausschalten der Bremse ansteuerbar ist. Mit dieser Lösung soll insbesondere ein Tipp-Betrieb für schnelle Bremsmotoren mit Wiederhol-Intervallen von ca. 100 ms möglich sein. Somit handelt es sich bei dem Gegenstand aus dieser Druckschrift um eine Vorrichtung bzw. ein Verfahren zum Minimieren der Schaltzeit der Bremse und zum Erhöhen der Wiederholbereitschaft des Schaltvorganges.

Aus der EP 0 242 671 A2 ist eine Bremse für einen Motor bekannt. Die Lüftung der Bremse für den Betriebszustand des Motors erfolgt durch einen gleichstrombetätigten Elektromagneten. Der Elektromagnet weist eine in eine Beschleunigungswicklung und in eine Haltewicklung geteilte Gesamtspule auf, wobei die beiden Wicklungen in Reihe geschaltet sind. Zum Lüften der Bremse wird zunächst nur die Beschleunigungsspule nach Anlegen der Netzspannung an den Motor mit Strom beaufschlagt. Da die Beschleunigungsspule einen kleineren Innenwiderstand als die Gesamtspule aufweist, fließt ein großer Strom, der einen großen magnetischen Fluß und somit eine schnelle Anzugswirkung und eine kleine Ansprechzeit der Bremse bewirkt. Da nach dem Ansprechen der Bremse der Luftspalt zwischen der Spule und dem Anker des Elektromagneten verringert und somit der magnetische Widerstand erhöht wurde, sind nur noch geringe Haltekräfte bzw. Halteströme als beim Ansprechen des Elektromagneten erforderlich. Daher erfolgt über ein Zeitschaltglied nach Lüftung der Bremse eine Umschaltung des Bremsenstroms auf die Gesamtspule. Um ein schnelles Abschalten des Elektromagneten bzw. Greifen der Bremse zu erreichen, ist die Haltewicklung der Spule in einem Freilaufkreis mit einer Freilaufdiode angeordnet.
Die vorbeschriebene Bremse für einen Wechselstrommotor erweist sich als nachteilhaft, da die Energieversorgung der Bremse nur über einen einzigen Leitungskreis einpulsig erfolgt. Diese Art der Energieversorgung führt zu entsprechend unsymmetrischen Strömen, wodurch die Wiederholbereitschaft für den Stoßstrom der Beschleunigerspule herabgesetzt wird. Darüber hinaus erweist sich der Aufbau der Gesamtspule aus zwei unterschiedlichen Spulenteilen als sehr aufwendig und somit teuer.

Der Erfindung liegt die Aufgabe zugrunde, ein Verfahren und eine Schaltungsanordnung für den Betrieb einer elektromagnetisch betätigbaren, mechanischen Bremse eines Elektromotors, insbesondere eines Getriebemotors, dahingehend weiterzubilden, daß derselbe Typ einer Erregerspule an Wechsel- bzw. Drehstromnetzen mit unterschiedlich hohen Spannungen betrieben werden kann.

Diese Aufgabe wird durch ein Verfahren nach Anspruch 1 und eine Schaltungsanordnung nach Patentanspruch 21 gelöst. Weiterbildungen sind Gegenstand der jeweils abhängigen Ansprüche.

Zum Betrieb der Bremse an Netzspannungen eines weiten Spannungsbereiches wird eine sich mit einer Zeitperiode ändernde unipolare Spannung durch eine Spannungsquelle erzeugt.

Die unipolare Spannung ist in einem ersten Zeitabschnitt der Zeitperiode positiv und von Null verschieden und weist in diesem ersten Zeitabschnitt einen Maximalwert auf und ist in einem zweiten Zeitabschnitt der Zeitperiode Null oder geht mindestens gegen Null.

Ein Strompfad für einen Erregerstrom von der Spannungsquelle zur Erregerspule wird im wesentlichen zu Beginn des ersten Zeitabschnittes freigegeben.

Der Strompfad wird zu einem bestimmten Zeitpunkt innerhalb des ersten Zeitabschnitts wieder gesperrt, wobei der bestimmte Zeitpunkt so gewählt wird, daß der Erregerstrom einen vorgegebenen Maximalwert nicht überschreitet.

Während eines Zeitraumes, in welchem die Erregerspule dauerhaft erregt ist bzw. erregt werden soll, wird das Freigeben und Sperren des Strompfades in jeder Zeitperiode wiederholt.

Vorzugsweise wird die unipolare Spannung durch eine Gleichrichtereinheit in der Spannungsquelle aus einer einphasigen Netzspannung des Wechselspannungsnetzes derart erzeugt, daß der erste Zeitabschnitt im wesentlichen die gesamte Wechselperiode überdeckt, so daß der zweite Abschnitt sehr kurz ist, wobei die Zeitperiode der halben Wechselperiode entspricht.

Alternativ können der erste und der zweite Abschnitt jeweils der halben Zeitperiode sowie der halben Wechselperiode entsprechen.

Vorzugsweise wird der Strompfad über Hauptstromelektroden eines elektronischen, über eine Steuerstrecke ein- und ausschaltbaren Einwegventils durch Einschalten des Einwegventils freigegeben und durch Ausschalten des Einwegventils gesperrt, wobei bei ausgeschaltetem Einwegventil ein Entladestrom aus der Erregerspule durch einen parallel zur Erregerspule liegenden Freipfad mit einem Abkling-Zeitverlauf geführt wird, welcher im wesentlichen der Zeitkonstante der Erregerspule entspricht.

Der Strompfad wird dann freigegeben, wenn die unipolare Spannung ausgehend von Null erstmals einen positiven Schwellenwert erreicht, der wesentlich niedriger ist als der Maximalwert.

Bei einer ersten Ausführungsform der Erfindung wird der Erregerstrom gemessen und der Strompfad dann gesperrt, wenn der Erregerstrom einen vorgegebenen ersten Schwellenhöchstwert erstmals nach einer vorausgegangenen Freigabe des Strompfades von niedrigeren Erregerstromwerten herkommend erreicht.

Bei einer zweiten Ausführungsform der Erfindung wird die unipolare Spannung gemessen und ein von Null ausgehender Integralwert der unipolaren Spannung über den ersten Zeitabschnitt gebildet, wobei der Strompfad dann gesperrt wird, wenn der Integralwert einen vorgegebenen zweiten Schwellenhöchstwert erstmals nach einer vorausgegangenen Freigabe des Strompfades von niedrigeren Integralwerten herkommend erreicht, wobei der zweite Schwellenhöchstwert derart vorgegeben wird, daß der Erregerstrom einen vorgegebenen Höchstwert nicht überschreitet.

Bei einer dritten Ausführungsform der Erfindung wird die unipolare Spannung gemessen und über ein Verzögerungsglied erster Ordnung ein erster gewichteter Meßwert der unipolaren Spannung gebildet, wobei der Strompfad dann gesperrt wird, wenn der erste gewichtete Meßwert einen vorgegebenen dritten Schwellenhöchstwert erstmals nach einer vorausgegangenen Freigabe des Stompfads von niedrigeren gewichteten Meßwerten herkommend erreicht, wobei eine Zeitkonstante des Verzögerungsglieds im wesentlichen entsprechend der Dauer des ersten Zeitabschnitts eingestellt und der dritte Schwellenhöchstwert so vorgegeben werden, daß der Erregerstrom einen vorgegebenen Höchstwert nicht überschreitet.

Bei einer vierten Ausführungsform der Erfindung werden eine längs der Erregerspule anstehende Spannung gemessen und über ein Verzögerungsglied erster Ordnung ein gewichteter zweiter Meßwert dieser Spannung gebildet, wobei der Strompfad dann gesperrt wird, wenn der zweite Meßwert einen vorgegebenen vierten Schwellenhöchstwert erstmals nach einer vorausgegangenen Freigabe des Strompfads von kleineren Werten herkommend erreicht, wobei eine Zeitkonstante des Verzögerungsglieds erster Ordnung im wesentlichen entsprechend der Zeitkonstante der Erregerspule gewählt wird und vorzugsweise mindestens doppelt so lang wie die Zeitperiode der unipolaren Spannung ist und wobei der vierte Schwellenhöchstwert derart vorgegeben wird, daß der Erregerstrom einen vorgegebenen Höchstwert nicht überschreitet. Es wird hier sozusagen der durch die Erregerspule fließende Strom "abgebildet", so daß eine direkte Strommessung nicht notwendig ist. Dies erniedrigt den Schaltungsaufwand.

Durch alle diese Ausführungsformen wird der die Erregerspule durchfließende Strom auf einen Wert eingestellt, welcher den Anforderungen der Bremse entspricht.

Vorzugsweise wird bei den ersten bis vierten Ausführungsformen der vorgegebene Schwellenhöchstwert in Abhängigkeit von einem Betriebszustand der Bremse insbesondere in Abhängigkeit von einem Lüften und einem Halten im gelüfteten Zustand verändert, so daß der Betriebszustand der Bremse (Lüften/Halten) berücksichtigt wird. Hierbei wird vorzugsweise der vorgegebene Schwellenhöchstwert zu Beginn einer erstmaligen Bestromung beim Lüften der Bremse für ein Erhöhungszeitintervall auf einen höheren Wert gesetzt wird als beim Halten, so daß das Lüften beschleunigt wird. Vorzugsweise ist dabei das Erhöhungszeitintervall größer oder gleich der Zeitkonstante der Erregerspule oder mindestens doppelt so lang wie die Zeitperiode der unipolaren Spannung.

Bei Verwendung des Einwegventils wird zum Schutz vor transienten Überspannungen das Einwegventil unabhängig von anderen Steuervorgaben immer dann eingeschaltet, wenn eine Spannung zwischen seinen Hauptstromelektroden bei der transienten Überspannung einen Überspannungsgrenzwert überschreitet, der größer ist als der betriebsmäßig vorgesehene Maximalwert der unipolaren Spannung, so daß die Überspannung über die Erregerspule abgebaut wird.

Weiterhin wird das Einwegventil dann eingeschaltet, wenn an der Steuerstrecke eine positive Spannung anliegt und dann ausgeschaltet, wenn an der Steuerstrecke eine negative Spannung oder eine Spannung Null anliegt, wobei der Steuerstrecke zum Einschalten des Einwegventils die unipolare Spannung über mindestens einen ohmschern Widerstand zugeführt und die positive Steuerspannung vorzugsweise über einen Zweipol begrenzt wird.

In beiden Fällen wird die Steuerstrecke zum Ausschalten des Einwegventils über mindestens einen ohmschern Widerstand und einen elektronischen Schalter kurzgeschlossen.

Bei der oben erwähnten höheren Bestromung beim Lüften der Bremse wird das Erhöhungszeitintervall durch ein Zeitglied derart gesteuert, daß das Erhöhungszeitintervall beginnt, wenn die unipolare Spannung erstmals durch Einschalten der Netzspannung des Wechselspannungsnetzes beim Lüften der Bremse einen vorgegebenen Schwellenwert erreicht, der wesentlich niedriger ist als der Maximalwert.

Bei der zweiten Ausführungsform der Erfindung wird der Integralwert während des zweiten Zeitabschnitts auf Null zurückgesetzt.

Bei der vierten Ausführungsform der Erfindung wird das Verzögerungsglied erster Ordnung während einer Freigabe des Strompfads mit der längs der Erregerspule anstehenden Spannung verbunden und während eines Sperrens des Strompfads eingangsseitig über einen elektronischen Schalter kurzgeschlossen.

Vorrichtungsmäßig umfaßt die Schaltungsanordnung:
eine Erregerspule mit Anschlußklemmen, die eine Zeitkonstante entsprechend einem Quotienten aus einer Spuleninduktivität und einem ohmschern Spulenwiderstand aufweist, zum Betätigen, insbesondere zum Lüften der Bremse;
ein Wechselspannungsnetz, das eine Netzspannung mit einer Wechselperiode abgibt;
eine Spannungsquelle zum Erzeugen einer sich mit einer Zeitperiode ändernden unipolaren Spannung, die in einem ersten Zeitabschnitt der Zeitperiode positiv und von Null verschieden ist und in diesem ersten Zeitabschnitt einen Maximalwert aufweist und in einem zweiten Zeitabschnitt der Zeitperiode Null ist oder mindestens gegen Null geht;
einen Strompfad für einen Erregerstrom, der von der Spannungsquelle zur Erregerspule und zurück führt;
ein elektronisches Einwegventil mit Hauptstromelektroden, über die der Strompfad zum Freigeben und Sperren des Strompfads führt und mit einer Steuerstrecke zum Ein- und Ausschalten des Einwegventils;
eine Steuerschaltung, die mit der Steuerstrecke verbunden und derart ausgebildet ist, daß das Einwegventil zum Freigeben des Strompfads im wesentlichen zu Beginn des ersten Zeitabschnitts eingeschaltet und zu einem bestimmten Zeitpunkt innerhalb des ersten Zeitabschnittes zum Sperren des Strompfades ausgeschaltet wird,
wobei die Steuerschaltung weiterhin so ausgebildet ist, daß der Erregerstrom einen vorgegebenen Maximalwert nicht überschreitet und während eines Zeitraums, in welchem die Erregerspule dauerhaft erregt ist bzw. erregt werden soll, das ein Ein- und Ausschalten des Einwegventils zum Freigeben und Sperren des Strompfads in jeder Zeitperiode widerholt wird.

Vorzugsweise ist die Spannungsquelle eingangsseitig mit einer einphasigen Netzspannung des Wechselspannungsnetzes verbunden und umfaßt eine Dioden-Brückenschaltung, so daß der erste Zeitabschnitt im wesentlichen die gesamte Wechselperiode umfaßt, so daß der zweite Zeitabschnitt sehr kurz ist und die Zeitperiode im wesentlichen der halben Wechselperiode entspricht.

Alternativ umfaßt die Spannungsquelle eine Dioden-Mittelpunktschaltung, so daß der erste und der zweite Zeitabschnitt jeweils der halben Zeitperiode sowie der halben Wechselperiode entsprechen.

Zusätzlich ist vorzugsweise parallel zu den Anschlußklemmen der Erregerspule ein Freilaufpfad mit einer Schaltungsanordnung zum Entladen der Erregerspule nach Sperren des Strompfades mit einer Entladezeitkonstanten entsprechend der Zeitkonstanten der Erregerspule geschaltet.

Vorzugsweise ist eine Spannungsmeßeinrichtung zur Abtastung der unipolaren Spannung und ein Schwellenwertglied zum Vorgeben eines positiven Schwellenwerts vorgesehen, wobei die Steuereinrichtung das Einwegventil dann zum Freigeben des Strompfads einschaltet, wenn die unipolare Spannung ausgehend von Null erstmals den positiven Schwellenwert erreicht, der wesentlich niedriger ist als der Maximalwert.

Eine erste Ausführungsform der Erfindung umfaßt eine Strommeßeinrichtung zum Erzeugen eines dem Erregerstrom entsprechenden Stromsignals, ein Schwellenwertglied, zum Vorgeben eines ersten Schwellenhöchstwerts, wobei die Steuerschaltung das Einwegventil zum Sperren des Strompfads dann ausschaltet, wenn das Stromsignal den ersten Schwellenhöchstwert erstmals nach einer vorausgegangenen Freigabe des Strompfads von niedrigeren Stromsignalen herkommend erreicht.

Eine zweite Ausführungsform der Erfindung umfaßt eine Integriereinrichtung zum Bilden eines von Null ausgehenden Integralwerts der unipolaren Spannung über den ersten Zeitabschnitt und ein Schwellenwertglied, zum Vorgeben eines zweiten Schwellenhöchstwerts, der so eingestellt ist, daß der Erregerstrom einen vorgegebenen Höchstwert nicht überschreitet, wobei der Steuerschaltung der Integralwert und der zweite Schwellenhöchstwert zugeführt werden zum Ausschalten des Einwegventils und zum Sperren des Strompfads dann, wenn der Integralwert den zweiten Schwellenhöchstwert erstmals und nach einer vorausgegangenen Freigabe des Strompfads von niedrigeren Integralwerten herkommend erreicht.

Eine dritte Ausführungsform der Erfindung umfaßt eine Spannungsmeßeinrichtung zum Abtasten der unipolaren Spannung und zum Abgeben eines Spannungsmeßwerts entsprechend der unipolaren Spannung, ein Verzögerungsglied erster Ordnung mit einer Zeitkonstanten, welche im wesentlichen der Dauer des ersten Zeitabschnitts entspricht, zum Erzeugen eines gewichteten Meßwerts aus dem Spannungsmeßwert, ein Schwellenwertglied zum Vorgeben eines dritten Schwellenhöchstwertes, der so eingestellt ist, daß der Erregerstrom einen vorgegebenen Höchstwert nicht überschreitet, wobei die Steuerschaltung das Einwegventil dann zum Sperren des Strompfads ausschaltet, wenn der gewichtete Meßwert den dritten Schwellenhöchstwert erstmals nach einer vorausgegangenen Freigabe des Strompfads von einem niedrigeren gewichteten Meßwert herkommend erreicht.

Eine vierte Ausführungsform der Erfindung umfaßt eine Spannungsmeßeinrichtung zum Abtasten einer Spannung an den Anschlußklemmen der Erregerspule und zum Abgeben eines entsprechenden Klemmenspannungsmeßwerts, ein Verzögerungsglied erster Ordnung mit einer Zeitkonstante, die im wesentlichen der Zeitkonstanten der Erregerspule entspricht und vorzugsweise mindestens doppelt so lang ist wie die Zeitperiode der unipolaren Spannung, zum Erzeugen eines gewichteten zweiten Meßwerts aus dem Klemmenspannungsmeßwert, ein Schwellenwertglied zum Vorgeben eines vierten Schwellenhöchstwerts, der so eingestellt ist, daß der Erregerstrom einen vorgegebenen Höchstwert nicht überschreitet, wobei die Steuerschaltung das Einwegventil dann zum Sperren des Strompfads ausschaltet, wenn der gewichtete zweite Meßwert den vierten Schwellenhöchstwert erstmals nach einer vorausgegangenen Freigabe des Strompfads von kleineren Werten herkommend erreicht. Durch diese Ausgestaltung wird ein "Modell" des Erregerstroms über eine Spannungsmessung nachgebildet.

Vorzugsweise weist bei diesen vier Ausführungsformen die Steuerschaltung Einrichtungen zum Verändern des Schwellenhöchstwerts in Abhängigkeit von einem Betriebszustand der Bremse bei einem Lüften und einem Halten in gelüftetem Zustand auf, um dem Betriebszustand der Bremse Rechnung zu tragen. Dabei weist die Steuerschaltung ein Zeitglied auf, um den Schwellenhöchstwert zu Beginn einer erstmaligen Bestromung beim Lüften der Bremse für ein Erhöhungszeitintervall auf einen höheren Wert zu setzen als beim Halten im gelüfteten Zustand. Damit werden das dynamische Verhalten der Bremse verbessert und die Erwärmung verringert.

Eine Überspannungsschutzeinrichtung ist vorgesehen, welche eine Spannung zwischen den Hauptstromelektroden abtastet und das Einwegventil zu dessen Schutz vor transienten Spannungen immer dann einschaltet, wenn die Spannung vorübergehend einen Überspannungsgrenzwert überschreitet, der größer ist als der betriebsmäßig vorgesehene Maximalwert der unipolaren Spannung.

Weiterhin umfaßt die Schaltungseinrichtung eine Schutzeinrichtung, die das Einwegventil dann einschaltet, wenn eine positive Spannung an der Steuerstrecke anliegt und dann ausschaltet, wenn eine negative Spannung oder eine Spannung Null an der Steuerstrecke anliegt. Hierbei umfaßt die Schaltungsanordnung mindestens einen ohmschen Widerstand zum Verbinden der Steuerstrecke mit der unipolaren Spannung zum Einschalten des Einwegventils und ein Begrenzerzweipol, das parallel zur Steuerstrecke zum Begrenzen einer positiven Steuerspannung geschaltet ist.

Vorzugsweise sind mindestens ein ohmscher Widerstand und ein elektronischer Schalter zum Kurzschließen der Steuerstrecke beim Ausschalten des Einwegventils vorgesehen.

Das Zeitglied umfaßt mindestens einen ohmschen Widerstand zur Spannungsversorgung aus der unipolaren Spannung.

Die zweite Ausführungsform umfaßt mindestens einen ohmschen Widerstand und einen Kondensator zur Bildung der Integriereinrichtung, mindestens einen ohmschen Widerstand zum Verbinden der Integriereinrichtung mit der unipolaren Spannung während des ersten Zeitabschnitts, einen elektronischen Schalter und einen ohmschen Widerstand zum Zurücksetzen der Integriereinrichtung auf den Wert Null im zweiten Zeitabschnitt.

Bei der dritten Ausführungsform umfaßt das Verzögerungsglied erster Ordnung mindestens einen ohmschen Widerstand und einen Kondensator und ist über mindestens einen ohmschen Widerstand mit der unipolaren Spannung verbunden.

Die vierte Ausführungsform umfaßt mindestens einen ohmschen Widerstand und einen Kondensator zur Bildung des Verzögerungsglieds erster Ordnung, mindestens einen ohmschen Widerstand zum Verbinden des Verzögerungsglieds erster Ordnung mit der unipolaren Spannung bei freigegebenem Strompfad und einen elektronischen Schalter zum eingangsseitigen Kurzschließen des Verzögerungsglieds erster Ordnung bei gesperrtem Strompfad.

Bevorzugtermaßen ist das Ventil ein Schalt-Transistor, vorzugsweise ein IGBT (Insulated Gate Bipolar Transistor). Ein IGBT ist dazu in der Lage, bei hohen Betriebsspannungen hohe Ströme zu schalten und kann mit einfachen Mitteln angesteuert werden.

Nachfolgend werden zur Erläuterung der Erfindung Ausführungsbeispiele anhand von Abbildungen beschrieben. Die Erfindung ist jedoch nicht auf diese Ausführungsbeispiele beschränkt.

Hierbei zeigen:
- Fig. 1: das Prinzipschaltbild eines ersten Ausführungsbeispiels der erfindungsgemäßen Schaltungsanordnung,
- Fig. 2: das Prinzipschaltbild eines zweiten Ausführungsbeispiels,
- Fig. 3: das Schaltbild eines Ausführungsbeispiels mit einer Komparatorschaltung,
- Fig. 4: das Schaltbild eines Ausführungsbeispiels mit einer Thyristor-Schaltung
- Fig. 5: ein Diagramm, das den zeitlichen Verlauf einer unipolaren Spannung und des Erregerstromes darstellt,
- Fig. 6: das Prinzipschaltbild eines weiteren Ausführungsbeispiels der erfindungsgemäßen Schaltungsanordnung,
- Fig. 7: das Schaltbild einer Anordnung zur Verfügungstellung einer unipolaren Spannung,
- Fig. 8: ein Diagramm, das den zeitlichen Verlauf einer unipolaren Spannung zeigt, die aus der Schaltung nach Figur 7 kommt,
- Fig. 9: das Schaltbild eines weiteren Ausführungsbeispiels zur Erzeugung einer unipolaren Spannung,
- Fig. 10: ein Diagramm, das den zeitlichen Verlauf der unipolaren Spannung aus der Schaltung nach Figur 9 darstellt,
- Fig. 11: das Prinzipschaltbild eines weiteren Ausführungsbeispiels der erfindungsgemäßen Schaltungsanordnung,
- Fig. 12: das Prinzipschaltbild noch eines weiteren Ausführungsbeispiels der erfindungsgemäßen Schaltungsanordnung,
- Fig. 13: das Prinzipschaltbild eines letzten Ausführungsbeispiels der erfindungsgemäßen Schaltungsanordnung,
- Fig. 14: das Schaltbild eines Teils eines Ausführungsbeispiels mit einem Überspannungsschutz für das Einwegventil,
- Fig. 15: das Schaltbild einer anderen Ausführungsform der Anordnung gemäß Figur 14,
- Fig. 16: ein Teil-Schaltbild zur Verdeutlichung eines Verzögerungsglieds erster Ordnung,
- Fig. 17: ein Schaltbild eines Ausführungsbeispiels, bei welchem der Strompfad in Abhängigkeit von der Spannung an der Erregerspule gesperrt wird,
- Fig. 18: das Schaltbild einer Anordnung zur Erzeugung einer Einschaltüberhöhung und
- Fig. 19: das Schaltbild einer anderen Anordnung zur Realisierung einer Einschaltüberhöhung.

In der nachfolgenden Beschreibung werden für gleiche und gleichwirkende Teile die selben Bezugsziffern verwendet.

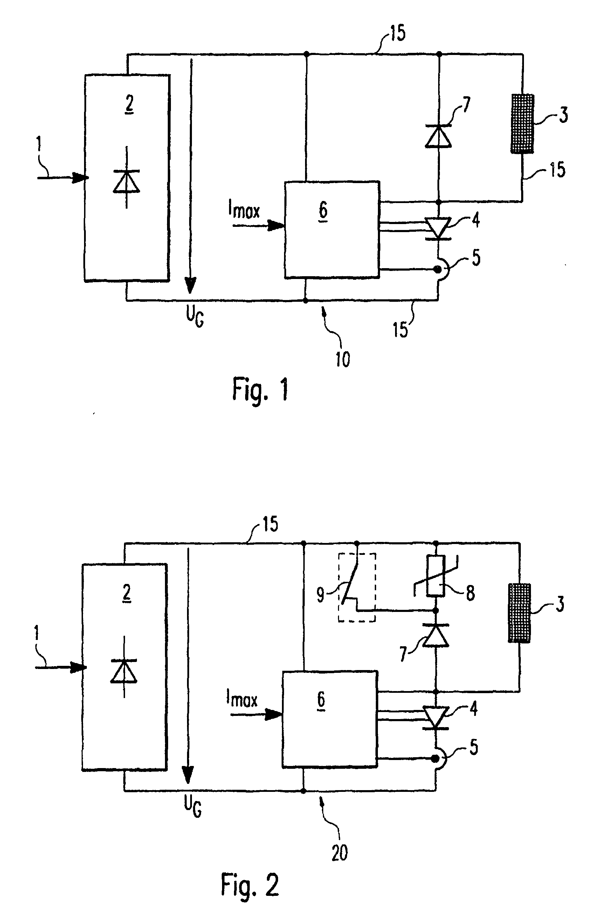

Bei dem in Fig. 1 gezeigten Prinzipschaltbild ist mit der Bezugsziffer 1 ein Wechsel- oder Drehstromnetz bezeichnet, das auf eine Spannungsquelle 2 geführt ist, deren gleichgerichtete unipolare Ausgangsspannung U_{G} zum Betrieb der Erregerspule 3 genutzt wird. Ein Strompfad 15 für den Erregerstrom verbindet die Ausgangsklemmen der Spannungsquelle 2 miteinander. Im Strompfad 15 befinden sich die Erregerspule 3, ein Ventil 4, das als Einwegventil ausgebildet ist, und ein Stromsensor 5, alle zueinander in Reihe geschaltet. Ebenfalls an die Ausgangsklemmen der Spannungsquelle 2 ist die Steuerschaltung 6 angekoppelt, durch die das Ventil 4 in Abhängigkeit einer durch den Stromsensor 5 gelieferten Meßgröße sperrbar ist. Der Erregerspule 3 ist eine Freilaufdiode 7 parallelgeschaltet, durch die der Erregerstrom bei abgeschaltetem Ventil 4 aufgrund der Induktivität der Erregerspule 3 fließen kann. Damit können extreme Schaltspitzen vermieden werden. Die so gebildete Schaltungsanordnung wird entweder ohne oder mit der Erregerspule 3 als eine bautechnische Einheit hergestellt.

Im Unterschied zu der Schaltungsanordnung nach Fig. 1 weist die in Fig. 2 gezeigte Schaltungsanordnung zwei weitere Bauelemente auf. Hierbei ist der Erregerspule 3 eine Reihenschaltung, bestehend aus der Freilaufdiode 7 und einem Varistor 8 parallelgeschaltet, wobei wiederum dem Varistor 8 ein Schaltkontakt 9 parallelgeschaltet ist. Zur Verkürzung der Bremseneinfallzeit, d. h. zur schnellen Betätigung einer elektromagnetisch betätigbaren, mechanischen Bremse, wird nicht nur das Wechsel- bzw. Drehstromnetz von der Spannungsquelle 2 getrennt, sondern wird zusätzlich die Erregerspule 3 durch den Schaltkontakt 9 direkt abgeschaltet. Zum Schutz des Schaltkontaktes 9 ist diesem der Varistor 8 parallelgeschaltet. Die Einsatzspannung des Varistors 8 ist vorzugsweise so bemessen, daß sie etwas größer als der Scheitelwert der unipolaren Spannung U_{G} ist.

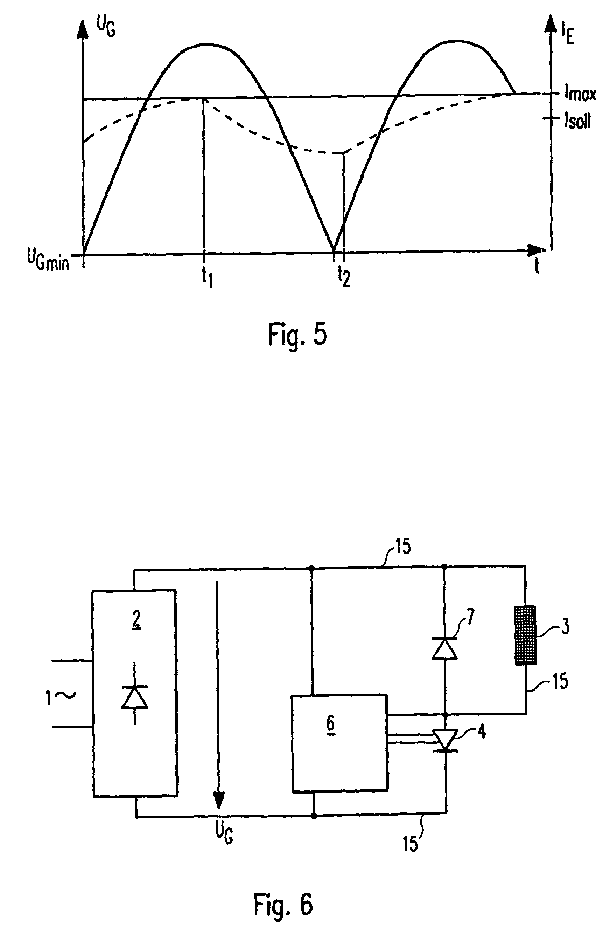

Anhand von Fig. 5 wird nun beispielhaft eine Ausführungsform des erfindungsgemäßen Verfahrens zur Einstellung des Erregerstromes einer Erregerspule beschrieben. Dabei wird weiterhin beispielhaft auf das Prinzipschaltbild von Fig. 1 bezug genommen. Zu einem früheren, in Fig. 5 nicht dargestellten Zeitpunkt wird die (Wechsel-)Versorgungsspannung eingeschaltet, d. h. an den Ausgangsklemmen der Spannungsquelle 2 liegt ab diesem Zeitpunkt eine sekundäre, sich im Zeitverlauf periodisch ändernde unipolare Spannung U_{G} an.

Zu Beginn der ersten Periode der unipolaren Spannung U_{G} versetzt die Steuerschaltung 6 das Ventil 4 in einen elektrisch leitenden Zustand, so daß ein Teil der unipolaren Spannung U_{G}, der durch den Innenwiderstand der Erregerspule 3 und die weiteren Widerstände entlang des Strompfades 15 bestimmt ist, an der Erregerspule anliegt. Gedämpft durch die Induktivität der Erregerspule 3 steigt der Erregerstrom I_{E} mit der unipolaren Spannung U_{G} zunächst an. Abhängig von der Dimensionierung der Bauteile der Schaltungsanordnung 10 kann der Erregerstrom I_{E} auch nach dem Überschreiten des Scheitelpunktes der unipolaren Spannung U_{G} noch weiter ansteigen. Spätestens nach dem Ablauf einiger Perioden ist der Erregerstrom I_{E} so weit angestiegen, daß sein über eine Periode gemittelter Wert etwa konstant bleibt.

Insbesondere, wenn die Zeitkonstante τ_{B}, gebildet durch den Quotienten der Induktivität und des ohmschern Widerstandes R_{B} der Erregerspule 3, die bevorzugt größer als die Periodendauer ist und wenn der zeitliche Mittelwert der an der Erregerspule 3 anliegenden Spannung größer als das Produkt des ohmschern Widerstandes R_{B} der Erregerspule 3 und eines vorgegebenen Maximalwertes Iₘₐₓ des Erregerstromes I_{E} ist, erreicht der Erregerstrom I_{E} den Höchstwert Iₘₐₓ. In dem in Fig. 5 gezeigten Fall tritt dies zum Zeitpunkt t1 ein. Anhand der von dem Stromsensor 5 übermittelten Meßgröße wird dieses Ereignis von der Steuerschaltung 6 festgestellt. Daraufhin schaltet die Steuerschaltung 6 das Ventil 4 aus, wodurch der Strompfad 15 gesperrt wird. Der Erregerstrom I_{E} kommutiert sodann in die Freilaufdiode 7 und fällt infolgedessen ab. Dieser Vorgang setzt sich bis zum Beginn der nächstfolgenden Periode der unipolaren Spannung U_{G} fort. Anschließend, zum Zeitpunkt t2, schaltet die Steuerschaltung 6 das Ventil 4 wieder ein, so daß der Strompfad 15 freigegeben wird und der Erregerstrom I_{E} wieder ansteigen kann. Der zeitliche Mittelwert des Erregerstromes I_{E} liegt daher zumindest geringfügig niedriger als der Höchstwert Iₘₐₓ. Der Zeitpunkt t2 folgt vorzugsweise in möglichst kurzem Abstand auf den Zeitpunkt, zu dem die unipolare Spannung U_{G} ihren Minimalwert (U_{Gmin}) annimmt.

Ist der Scheitelwert der unipolaren Spannung U_{G} kleiner als das Produkt des ohmschern Widerstandes R_{B} und des Höchstwertes Iₘₐₓ, dann erreicht der Erregerstrom I_{E} nicht den Höchstwert Iₘₐₓ. Bei bestimmten Ausgestaltungen der erfindungsgemäßen Schaltungsanordnung ist es jedoch auch in diesem Fall möglich, daß das Ventil 4 zeitweise gesperrt ist, nämlich innerhalb eines kurzen Zeitintervalls, in dem die unipolare Spannung U_{G} annähernd verschwindet. Dieses Zeitintervall ist aber in der Regel wesentlich kürzer als die Periodendauer der unipolaren Spannung U_{G}.

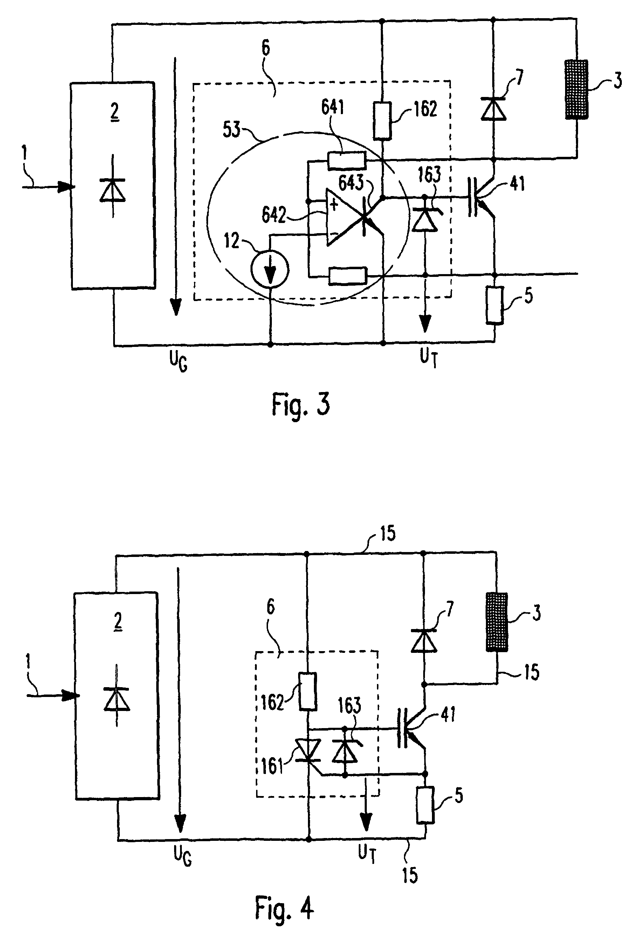

Das in Fig. 3 gezeigte Ausführungsbeispiel einer erfindungsgemäßen Schaltungsanordnung weist eine Steuerschaltung 6 mit einer Komparatorschaltung 53 auf. Die Steuerschaltung 6 weist weiterhin einen Steuerwiderstand 162 und eine Zenerdiode 163 auf. Die Zenerdiode 163 ist parallel zu der Steuerstrecke eines IGBT (Insulated Gate Bipolar Transistor) 41 geschaltet und verhindert so eine unzulässig hohe Spannungsbeanspruchung dieser Steuerstrecke. Andererseits ist die Zenerdiode 163 so bemessen, daß die Steuerstrecke sicher durchgeschaltet werden kann. Als Schaltelement weist die Komparatorschaltung 53 einen Operationsverstärker 642 auf, der einen bipolaren Transistor 643 ansteuert, dessen Kollektor mit der einen Klemme der Spannungsquelle 2 über den Steuerwiderstand 162 verbunden ist und dessen Emitter mit der anderen Klemme der Spannungsquelle 2 verbunden ist. Der Steuerwiderstand 162 ist so klein bemessen, daß die Steuerstrecke des IGBT 41 schon dann sicher durchgeschaltet wird, wenn die unipolare Spannung U_{G} einen kleinen Wert hat, der vorzugsweise mindestens eine Größenordnung (Faktor 0.1) kleiner als der Scheitelwert der unipolaren Spannung U_{G} ist. Bei einer sich im Zeitverlauf periodisch ändernden unipolaren Spannung U_{G} wird daher der IGBT 41 bereits zu Beginn einer Periode in den elektrisch leitenden Zustand versetzt.

Als Steuergröße wird der Steuerschaltung 6 die an dem Sensorwiderstand 5 abfallende Steuerspannung U_{T} zur Verfügung gestellt. Ein Teil der Steuerspannung U_{T} wird durch die Komparatorschaltung 53 mit einer durch eine Referenzspannungsquelle 12 erzeugten Referenzspannung verglichen. Die Referenzspannung ist ein Maß für den Höchstwert Iₘₐₓ des Erregerstromes. Erreicht der Erregerstrom I_{E} den Höchstwert Iₘₐₓ, dann stimmen die Steuerspannung U_{T} und die Referenzspannung miteinander überein. Dann kippt die Komparatorschaltung 53, so daß der bipolare Transistor 643 leitend wird und der IGBT 41 in den elektrisch sperrenden Zustand übergeht. Der Erregerstrom I_{E} kommutiert sodann in die Freilaufdiode 7. Vorzugsweise ist die Referenzspannung der Referenzspannungsquelle 12 von außen verstellbar, beispielsweise durch eine nicht gezeigte Verstelleinrichtung zur Steuerung des Bremsverhaltens.

Ein Hysteresewiderstand 641 zwischen dem nichtinvertierenden Eingang des Operationsverstärkers 642 und dem Verbindungspunkt zwischen der Erregerspule 3 und dem IGBT 41 verhindert ein Zurückkippen der Komparatorschaltung 53, so lange die unipolare Spannung U_{G} noch nicht wieder auf einen sehr kleinen Wert abgefallen ist, der vorzugsweise mindestens eine Größenordnung kleiner als der Scheitelwert der unipolaren Spannung U_{G} ist.

Bei der in Fig. 4 gezeigten Schaltungsanordnung übernimmt die Steuerschaltung 6 die Ansteuerung des IGBT 41. Der Höchstwert Iₘₐₓ ergibt sich hierbei aus der Dimensionierung der Elemente der Steuerschaltung 6, des IGBT 41 und des Sensorwiderstandes 5. Der mit einem Thyristor 161 in Reihe zwischen die Anschlußklemmen der Spannungsquelle 2 geschaltete Steuerwiderstand 162 ist so bemessen, daß die Steuerstrecke des IGBT 41 schon dann sicher durchgeschaltet wird, wenn die unipolare Spannung U_{G} erst einen kleinen Wert angenommen hat, welcher mindestens eine Größenordnung kleiner als der Scheitelwert der unipolaren Spannung U_{G} ist. Die der Steuerstrecke des IGBT 41 parallelgeschaltete Zenerdiode 163 ist so bemessen, daß einerseits die Steuerstrecke des IGBT 41 sicher durchgeschaltet werden kann, andererseits aber eine unzulässig hohe Spannungsbeanspruchung dieser Steuerstrecke vermieden wird. Der Wert des Sensorwiderstandes 5 ist so gewählt, daß die an ihm abfallende Spannung U_{T} der Zündspannung des Thyristors 161 entspricht, wenn durch den Sensorwiderstand 5 ein Strom mit dem Wert des Höchststromes Iₘₐₓ fließt. In diesem Fall zündet der Thyristor 161, d. h. er geht in einen elektrisch leitenden Zustand über, mit der Folge, daß die Anschlüsse der Steuerstrecke des IGBT 41 kurzgeschlossen sind. Folglich sperrt der IGBT 41 den Strompfad 15. Der Thyristor 161 verlöscht erst dann wieder, wenn die unipolare Spannung U_{G} auf den Wert 0 abgefallen ist. Der IGBT 41 wird daher erst wieder etwa zu Beginn eines erneuten Ansteigens der unipolaren Spannung U_{G} eingeschaltet, d. h. der Strompfad 15 wird freigegeben.

Bei der in Fig. 6 gezeigten Prinzipschaltung ist im Gegensatz zu den Prinzipschaltungen nach den Fig. 1 und 2 kein Stromsensor vorgesehen. Dennoch wird die eingangs genannte Aufgabe auch bei dieser Schaltung gelöst und zwar durch Einstellung desjenigen Zeitabschnittes, über den der Erregerspule 3 Strom zugeführt wird. Dies wird in den nachfolgenden Beispielen näher erläutert.

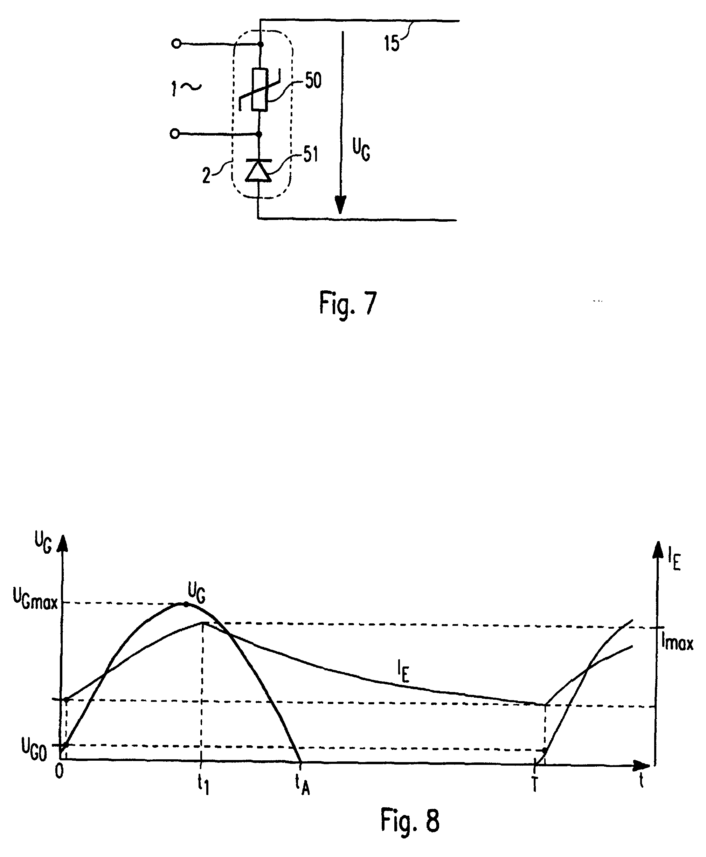

Zunächst wird auf die Fig. 7 und 8 Bezug genommen, welche eine Ausführungsform der Erfindung zeigen, bei welcher die Spannungsquelle 2 eine Diode 51 im Strompfad 15 aufweist, so daß eine Einweggleichrichtung der aus dem Wechselstromnetz 1 kommenden Wechselspannung bewerkstelligt wird. Zwischen die Klemmen des Wechselstromnetzes 1 ist ein Varistor 50 zum Schutz vor Überspannungen geschaltet.

Die Spannungs- und Stromverläufe sind in Fig. 8 dargestellt. Die Diode 51 läßt lediglich die positiven Halbwellen der Wechselspannung durch, so daß nur zwischen dem Zeitpunkt 0 und dem Zeitpunkt t_{A} die unipolare Spannung U_{G} vorliegt. Während des Zeitraumes t_{A} bis T, also während des zweiten Teils der Wechselspannungsperiode 0-T liegt keine Spannung vor. Im Diagramm nach Fig. 8 sind weiterhin eine untere Schwelle U_{G0} und der Maximalwert U_{Gmax} der unipolaren Spannung U_{G} gezeigt.

Der Erregerstrom I_{E} steigt von dem Zeitpunkt, zu welchem die unipolare Spannung U_{G} die untere Schwelle U_{G0} überschreitet, bis zu einem Zeitpunkt t1 an, zu welchem der Erregerstrom I_{E} einen Maximalwert Iₘₐₓ erreicht und fällt dann wieder ab, bis die unipolare Spannung U_{G} in der nächsten Periode T-2T die untere Schwelle U_{G0} wieder erreicht. Die Periodendauer des Erregerstromverlaufes entspricht also derjenigen der unipolaren Spannung U_{G}, ist aber zeitlich etwas verschoben.

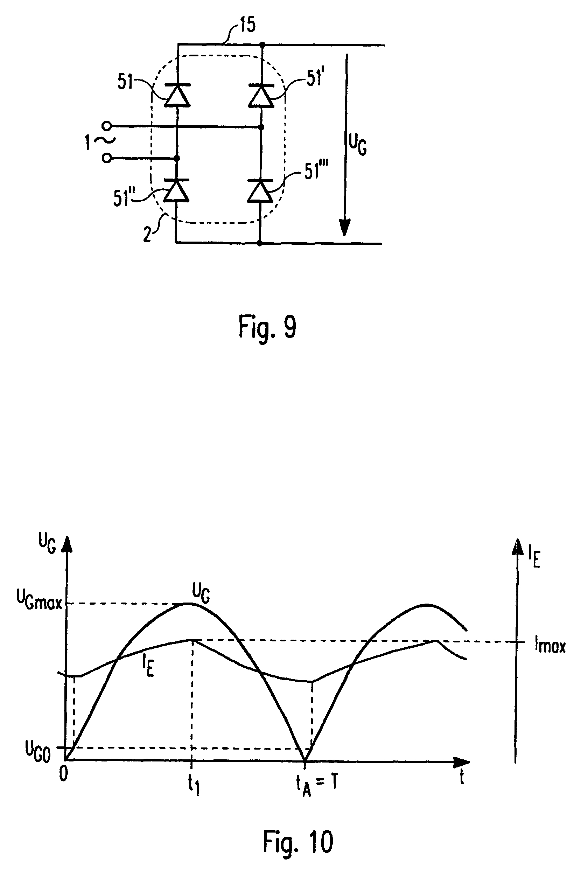

Bei der in Fig. 9 gezeigten Ausführungsform der Spannungsquelle 2 sind vier Dioden 51, 51', 51" und 51''' in Brükkenschaltung vorgesehen, so daß die unipolare Spannung U_{G} den in Fig. 10 gezeigten Verlauf aufweist, wie dies an sich bekannt ist. Der Erregerstrom I_{E} steigt auch hier zu dem Zeitpunkt an, zu welchem die unipolare Spannung U_{G} die untere Schwelle U_{G0} überschreitet, wobei der Anstieg ebenfalls bis zum Zeitpunkt t1 andauert, zu welchem der Erregerstrom I_{E} den Höchstwert Iₘₐₓ erreicht, um dann wieder abzufallen bis zu dem Zeitpunkt, zu welchem die zweite Halbwelle der unipolaren Spannung U_{G} die untere Schwelle U_{G0} überschreitet. Die Periodendauer ist in diesem Fall halb so lang wie die bei dem zuvor gezeigten Ausführungsbeispiel.

Nachfolgend werden verschiedene Ausführungsformen der Steuerschaltung anhand von Blockschaltungen erläutert.

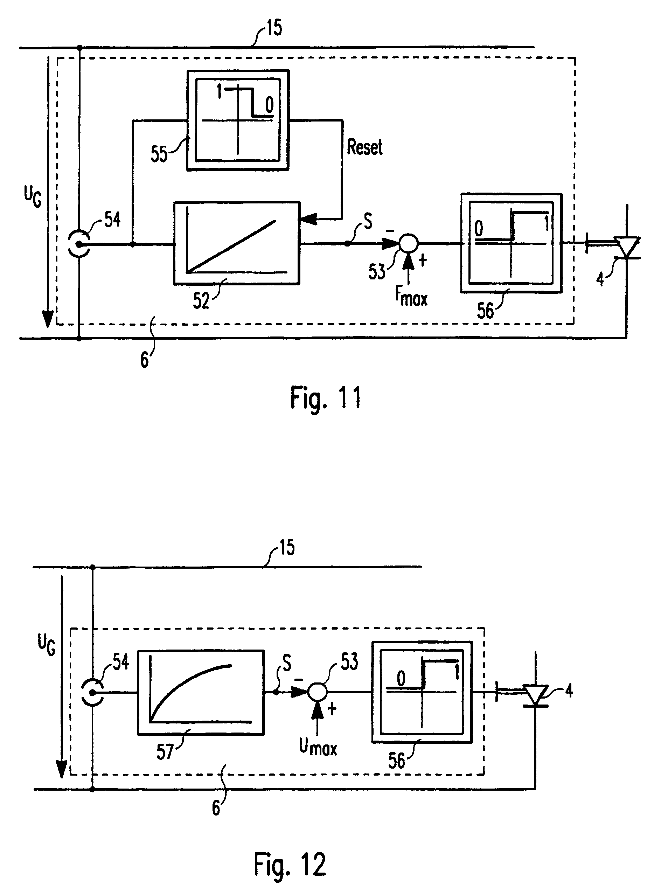

Die in Fig. 11 dargestellte Ausführungsform weist einen Spannungssensor 54 auf, welcher die unipolare Spannung U_{G} abtastet. Der Abtast- oder Meßwert wird dem Eingang einer Integriereinrichtung 52 sowie dem Eingang eines Rücksetzschalters 55 zugeführt, dessen Ausgang auf einen Rücksetzeingang der Integriereinrichtung 52 geführt ist. Wenn die vom Spannungssensor 54 abgetastete unipolare Spannung U_{G} einen vorbestimmten Wert unterschreitet, setzt der Rücksetzschalter 55 den in der Integriereinrichtung 52 gespeicherten Wert auf Null zurück.

Der Ausgang der Integriereinrichtung 52 ist auf einen Komperator 53 geführt, welcher den Wert des in der Integriereinrichtung 52 gebildeten Integrals der unipolaren Spannung U_{G} über die Zeit mit einem vorgegebenen Schwellenhöchstwert Fₘₐₓ vergleicht. Der Vergleichswert wird über eine Ansteuerschaltung 56 (entsprechend einem Schmitttrigger) zugeführt, dessen Ausgang auf der Steuerstrecke des elektronischen Einwegventils 4 liegt. Überschreitet der Integralwert den Schwellenhöchstwert Fₘₐₓ, so wird das Einwegventil 4 ausgeschaltet.

Nachfolgend wird die Funktionsweise dieser Anordnung beschrieben. Hierbei wird Bezug auf den Verlauf der unipolaren Spannung U_{G} gemäß Fig. 8 oder Fig. 10 genommen.

Wenn die Spannung U_{G} bei Null ist (Zeitpunkt 0), so hält der Rücksetzschalter 55 den Integralwert in der Integriereinrichtung 52 auf Null. Wenn die Spannung nun ansteigt, gibt der Rücksetzschalter 55 den Rücksetzeingang der Integriereinrichtung 52 frei, so daß diese die Spannung U_{G} über die Zeit integriert. Der Integralwert wird mit dem Schwellenhöchstwert Fₘₐₓ verglichen. Dann, wenn der Integralwert den Schwellenhöchstwert erreicht, dies ist zu dem in Fig. 8 und Fig. 10 mit t1 bezeichnetem Zeitpunkt der Fall, wird das bisher angeschaltete Ventil 4 ausgeschaltet, so daß der Strompfad 15 nunmehr gesperrt ist. Zum Zeitpunkt t_{A}, bei welchem die unipolare Spannung U_{G} den Wert Null erreicht, wird der Integralwert in der Integriereinrichtung 52 wieder auf Null gesetzt und dort gehalten, bis die Spannung U_{G} wieder ansteigt, so daß dieser Vorgang von vorne beginnt.

Die in Fig. 12 gezeigte Ausführungsform der Erfindung unterscheidet sich von der nach Fig. 11 dadurch, daß anstelle der Integriereinrichtung 52 mit dem Rücksetzschalter 55 die unipolare Spannung U_{G} mittels eines Verzögerungsglieds erster Ordnung 57 (Tiefpaß) gewichtet wird. Der Strompfad 15 wird durch Ausschalten des Ventils 4 dann geöffnet, wenn der gewichtete Wert der unipolaren Spannung U_{G} einen Schwellenhöchstwert Uₘₐₓ überschreitet. Dieser Schwellenhöchstwert Uₘₐₓ ist ebenso wie der zuvor genannte Schwellenhöchstwert Fₘₐₓ so eingestellt, daß der Zeitpunkt t1 zum Umschalten bei Erreichen des Höchstwertes des Erregerstroms Iₘₐₓ eingehalten wird.

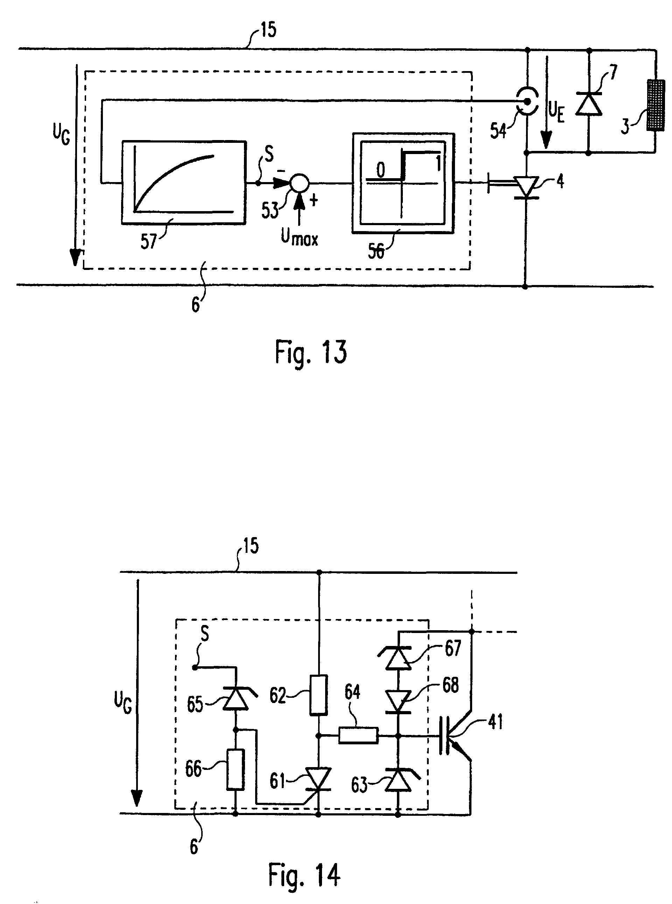

Die in Fig. 13 gezeigte Anordnung unterscheidet sich von der nach Fig. 12 dadurch, daß nicht die unipolare Spannung U_{G}, sondern die an den Klemmen der Erregerspule 3 anstehende Spannung U_{E} gemessen und dem Verzögerungsglied 57 zugeleitet wird. Ansonsten ist die Funktion dieselbe. Wenn die Zeitkonstante des Verzögerungsglieds erster Ordnung 57 so gewählt wird wie die Zeitkonstante τ_{E} der Erregerspule 3, so entspricht der Verlauf der Ausgangsspannung des Verzögerungsglieds erster Ordnung 57 am Punkt S exakt dem Erregerstrom I_{E}, bildet diesen also ab.

Bei der in Fig. 14 gezeigten Schaltung sind der Komperator 53, die Ansteuerschaltung 56 und das Einwegventil 4 realisiert. Der in Fig. 14 gezeigte Punkt S kann also mit dem entsprechenden Punkt S der Anordnung nach einer der Fig. 11 bis 13 verbunden werden, so daß die dort symbolisch angeordneten Baugruppen 53 und 56 durch die Schaltung nach Fig. 14 realisiert sind.

Der Punkt S ist mit einer Reihenschaltung bestehend aus einer Zenerdiode 65 und einem Widerstand 66 verbunden. Der Verbindungspunkt zwischen der Zenerdiode 65 und dem Widerstand 66 liegt auf dem Gate eines Thyristors 61, der mit einem Widerstand 62 eine Reihenschaltung bildet, welche mit den Klemmen der Spannungsquelle 2 verbunden ist. Der Verbindungspunkt zwischen dem Thyristor 61 und dem Widerstand 62 ist über einen Widerstand 64 auf das Gate eines Ventils 41 geführt, das mit dessen Emitter über eine Zenerdiode 63 und mit dessen Kolektor über eine Reihenschaltung bestehend aus einer Zenerdiode 67 und einer Diode 68 verbunden ist. Das Ventil 41 entspricht dem in den Fig. 11 bis 13 gezeigten Ventil 4.

Das Ventil 41 wird dann eingeschaltet, wenn die unipolare Spannung U_{G} erstmals den Wert U_{G0} erreicht. Das Ventil 41 schaltet dann aus, wenn das Signal am Eingang S (aus der Integriereinrichtung 52 bzw. dem Verzögerungsglied erster Ordnung 57) den Schwellenwert (Uₘₐₓ bzw. Fₘₐₓ) erreicht, der gegeben ist durch die Summe der Zündspannung des Thyristors 61 und der Zenerspannung der Zenerdiode 65. Nach dem Zünden des Thyristors 61 bleibt dieser unabhängig vom Signal an S leitend, bis die unipolare Spannung U_{G} wieder zu Null wird. Durch die Diode 68 und die Zenerdiode 67 ist ein Überspannungsschutz für das Ventil 41 realisiert, da die Zenerdiode 67 ab einer gewissen Spannung Strom zum Durchschalten des Ventils 41 durchläßt. Die Zenerdiode 63 wiederum schützt die Steuerstrecke des Ventils 41.

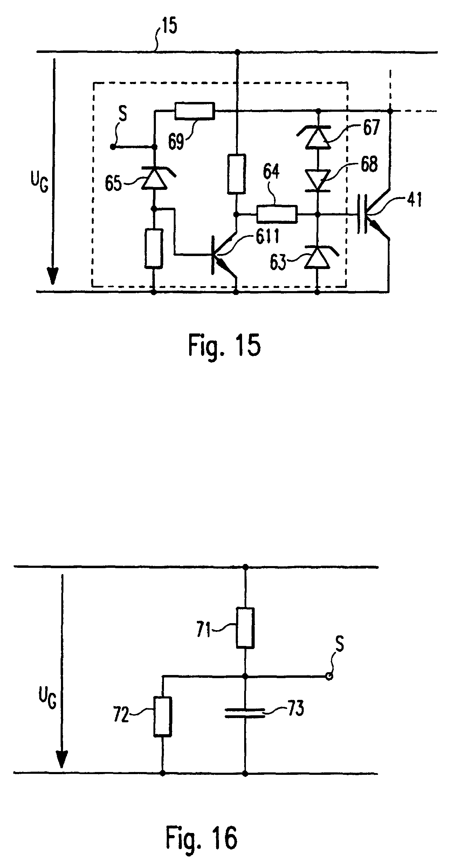

Bei der in Fig. 15 gezeigten Schaltung wird im wesentlichen dieselbe Funktion realisiert wie bei der Schaltung nach Fig. 14. Der Einrast-Mechanismus, also das Beibehalten des Zustands des Thyristors 61 nach dessen Zünden wird bei der in Fig. 15 gezeigten Schaltung durch den Selbsthaltemechanismus eines Transistors 611 erreicht, der statt des in Fig. 14 gezeigten Thyristors 61 vorgesehen ist. Dies wird über den Widerstand 69 der Schaltung nach Fig. 15 erreicht, welcher den Punkt S mit dem Kollektor des Ventils 41 verbindet, wenn die Spannung am Punkt S den Schwellenwert (Uₘₐₓ, Fₘₐₓ) erreicht, der durch die Zenerdiode 65 zuzüglich der Basisspannung des Transistors 611 definiert ist. Bei Erreichen dieses Schwellenwertes schaltet der Transistor 611 ein. Damit wird die Basispannung des Transistors 41 heruntergezogen, so daß der Transistor 41 sperrt. Dann liegt der Kollektor im wesentlichen auf der unipolaren Spannung U_{G} (wenn der Spannungsabfall über die Erregerspule 3 zunächst nicht berücksichtigt wird). Daher fließt über den Widerstand 69 und die Zenerdiode 65 ein zusätzlicher Steuerstrom für den Transistor 611 vom Kollektor des Transistors 41.

Die Schaltung nach Fig. 16 umfaßt eine Reihenschaltung aus einem Widerstand 71 und einem Kondensator 73, dem wiederum ein Widerstand 72 parallel geschaltet ist. Der Verbindungspunkt zwischen dem Widerstand 71 und dem Kondensator 73 ist in Fig. 16 als Punkt S bezeichnet. Diese Schaltung bildet eine einfache Form einer Integriereinrichtung 52, so daß der Punkt S mit dem ebenso benannten Punkt S einer der Schaltungen nach Fig. 14 oder Fig. 15 zur Bildung einer vollständigen Steuerschaltung 6 verbunden werden kann. Bei einer entsprechenden Bemessung der Kapazität des Kondensators 73 bzw. der Widerstände 71 und 72 wird ein Verzögerungsglied mit einer Zeitkonstante von ca. 10 ms gebildet, das zu Beginn des Spannunganstiegs in jeder Netzperiode eine näherungsweise Realisierung einer Integriereinrichtung darstellt.

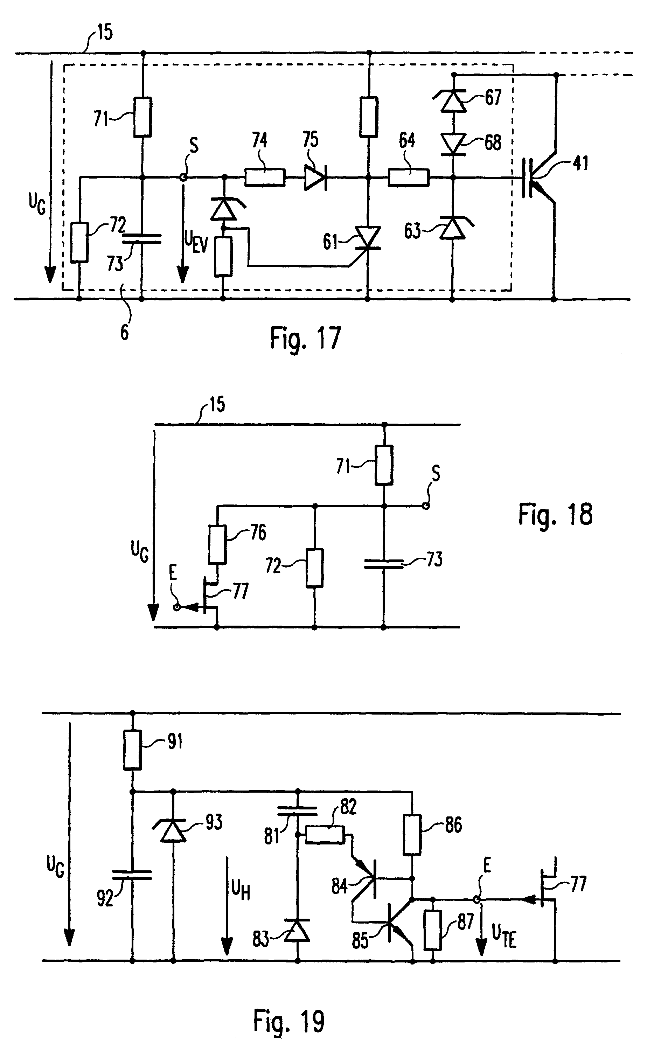

Bei der in Fig. 17 gezeigten Variante der Erfindung handelt es sich um eine Schaltung, bei welcher der durch die Erregerspule 3 fließende Strom durch eine entsprechende Dimensionierung des Verzögerungsglieds erster Ordnung gebildet aus dem Widerstand 71 und dem Kondensator 73 (mit parallelgeschaltetem Widerstand 72) abgebildet wird und als Spannung U_{EV} am Punkt S erscheint. Das Ventil 41 schaltet dann ein (und gibt den Strompfad 15 frei), wenn an der Erregerspule 3 die Spannung U_{G} anliegt. Die Spannung U_{EV} (am Punkt S) folgt verzögert. Wenn das Ventil 41 ausschaltet, so liegt an der Erregerspule 3 die Spannung Null an. Die Spannung U_{EV} folgt wiederum verzögert. Hierbei muß der in Fig. 17 gezeigte Widerstand 71 des Verzögerungsglieds erster Ordnung sehr viel größer sein als der Widerstand 72. Dieser wiederum muß größer sein als der Widerstand 74. Die übrigen Schaltungselemente sind der Fig. 17 direkt zu entnehmen.

Bei der in Fig. 18 gezeigten Schaltung wird eine Einschaltüberhöhung realisiert, durch welche ein höherer Erregerstrom I_{E} durch die Erregerspule 3 beim Lüften fließt als während des Haltens der Bremse im gelüfteten Zustand. Dies wird dadurch erreicht, daß das Verzögerungsglied erster Ordnung 57, durch welches der Meßwert der Spannung U_{G} gewichtet wird, während eines Zeitintervalls T_{E} (beim Lüft-Vorgang) verringert wird und zwar durch Einschalten eines Hilfstransistors 77, der als selbstleitender Transistor ausgebildet ist. Dieser Transistor 77 bildet zusammen mit einem Widerstand 76 eine Reihenschaltung, die parallel zum Kondensator 73 und zu dem Widerstand 72 liegt.

Fig. 19 zeigt eine Schaltung zur Erzeugung des Signals, welches den Transistor 77 gemäß Fig. 18 steuert. Mit der in Fig. 19 gezeigten Zenerdiode 93 und dem Kondensator 92 wird eine stabilisierte Gleichspannung U_{H} erzeugt. Das oben genannte Zeitintervall T_{E} wird im wesentlichen durch die Kapazität des Kondensators 81 und den Wert des Widerstands 82 bestimmt. Zu Beginn ist der Verbindungspunkt des Kondensators 81 und des Widerstands 82 nahezu auf dem Niveau von U_{H}. Vom Kollektor des Transistors 84 fließt Strom zur Basis des Kollektors 85 bzw. zu dessen Kollektor. Dadurch werden die Transistoren 84 und 85 gleitend. Die Spannung U_{TE} am Punkt E wird damit in etwa zu Null, so daß der Transistor 77 (siehe Fig. 18) leitend wird. Wenn nun der Kondensator 81 über den Widerstand 82 auf im wesentlichen die Spannung U_{H} aufgeladen ist, liegt der Verbindungspunkt zwischen dem Kondensator 81 und dem Widerstand 82 nahezu auf Null. Also fließt kein Strom mehr über den Widerstand 82 an den Kollektor 84. Daher sperren die Transistoren 84 und 85, so daß der Transistor 77 ebenfalls gesperrt wird. Die Spannung U_{TE} steigt über den Spannungsteiler gebildet aus den Widerständen 86 und 87 auf die Spannung U_{H} an. Die Diode 83 entlädt den Kondensator 81, wenn die unipolare Spannung U_{G} über längere Zeit, d.h. über viele Netzperioden Null ist. Somit weist die Schaltung gemäß Fig. 19 ein bistabiles Verhalten auf.

Aus obigen Ausführungen ergibt sich, daß eine Vielzahl von schaltungstechnischen Realisierungsmöglichkeiten für die eingangs beschriebenen Verfahren für den hier tätigen Fachmann gegeben ist. In der industriellen Produktion werden jedoch möglichst einfache und kostengünstige Varianten gesucht, bei denen zur Erzielung genauer charakteristischen Zeitkonstanten auf die relativ gute Fertigungsgenauigkeit von Kondensatoren, Widerständen oder Zenerdioden zurückgegriffen werden kann, ohne daß ein allzu großer Schaltungsaufwand betrieben werden muß.

Aufgrund der erfindungsgemäßen Schaltungsanordnung bzw. aufgrund des erfindungsgemäßen Verfahrens ist es nunmehr möglich, denselben Typ einer Erregerspule innerhalb eines großen Bereiches von Versorgungsspannungen zu betreiben. Dadurch steigt die Stückzahl mit der ein bestimmter Typ einer Erregerspule hergestellt wird. Dies wirkt sich vorteilhaft auf die Kosten für Entwicklung, Rohmaterial und Werkzeuge, Fertigungseinrichtungen, Prüfeinrichtungen, Lagerlogistik sowie Vertriebslogistik aus.

In den Zeichnungen und in der Beschreibung haben die Bezugszeichen folgende Bedeutung:
- 1: Wechsel- bzw. Drehstromnetz
- 2: Spannungsquelle
- 3: Erregerspule
- 4: Einweg-Ventil
- 41: IGBT
- 5: Stromsensor
- 6: Steuerschaltung
- 161: Thyristor
- 611: Transistor
- 162: Steuerwiderstand
- 163: Zenerdiode
- 641: Hysteresewiderstand
- 642: Operationsverstärker
- 643: bipolarer Transistor
- 7: Freilaufdiode/Freilaufpfad
- 8: Varistor
- 9: Schaltkontakt
- 10: Schaltungsanordnung
- 12: Referenzspannungsquelle
- 15: Strompfad
- 20: Schaltungsanordnung
- Iₘₐₓ: (erster) Schwellenhöchstwert
- Fₘₐₓ: (zweiter) Schwellenhöchstwert
- Uₘₐₓ: (dritter/vierter) Schwellenhöchstwert
- I_{E}: Erregerstrom
- Iₘₐₓ: Höchstwert des Erregerstromes
- R_{B}: ohmscherr Widerstand der Erregerspule
- U_{G}: unipolare Spannung
- U_{Gmin}: Minimalwert der unipolaren Spannung U_{G}
- U_{Gmax}: Maximalwert der unipolaren Spannung U_{G}
- U_{G0}: untere Schwelle
- U_{T}: Steuerspannung
- τ_{B}: Zeitkonstante der Erregerspule
- T_{W}: Wechselperiode des Wechselspannungsnetzes
- 50: Varistor
- 51-51''': Diode
- 52: Integriereinrichtung
- 53: Komparator
- 54: Spannungssensor
- 55: Rücksetzschalter
- 56: Ansteuerschaltung
- 57: Verzögerungsglied
- 61: Tyristor
- 62: Widerstand
- 63: Zenerdiode
- 64: Widerstand
- 65: Zenerdiode
- 66: Widerstand
- 67: Zenerdiode
- 68: Diode
- 69: Widerstand
- 71: Widerstand
- 72: Widerstand
- 73: Kondensator
- 74: Widerstand
- 75: Diode
- 76: Widerstand
- 77: Transistor
- 81: Kondensator
- 82: Widerstand
- 83: Diode
- 84: Transistor
- 85: Transistor
- 86: Widerstand
- 87: Widerstand
- 91: Widerstand
- 92: Kondensator
- 93: Zenerdiode

## Patentansprüche

1. Verfahren zum Betrieb einer elektromagnetisch betätigbaren, mechanischen Bremse eines Elektromotors, insbesondere Getriebemotors,
mit einer Erregerspule (3) zum Betätigen, insbesondere zum Lüften der Bremse,
mit einem Wechselspannungsnetz (1), das eine Netzspannung mit einer Wechselperiode (T_{W}) abgibt, wobei
die Erregerspule (3) eine Zeitkonstante (τ_{B}) entsprechend einem Quotienten aus einer Spuleninduktivität und einem ohmschen Spulenwiderstand aufweist, **dadurch gekennzeichnet, daß**
- zum Betrieb der Bremse an Netzspannungen eines weiten Spannungsbereiches eine sich mit einer Zeitperiode (T) ändernde unipolare Spannung (U_{G}) durch eine Spannungsquelle (2) erzeugt wird,
- die unipolare Spannung (U_{G}) in einem ersten Zeitabschnitt (0 bis t_{A}) der Zeitperiode (T) positiv und von Null verschieden ist und in diesem ersten Zeitabschnitt (0 bis t_{A}) einen Maximalwert (U_{Gmax})aufweist und in einem zweiten Zeitabschnitt (t_{A} bis T) der Zeitperiode (T) Null ist oder mindestens gegen Null geht,
- ein Strompfad (15) für einen Erregerstrom von der Spannungsquelle (2) zur Erregerspule (3) im wesentlichen zu Beginn des ersten Zeitabschnittes (0 bis t_{A}) freigegeben wird,
- der Strompfad (15) zu einem bestimmten Zeitpunkt (t₁ = t_{A}) innerhalb des ersten Zeitabschnitts (0 bis t_{A}) wieder gesperrt wird, wobei der bestimmte Zeitpunkt (t₁ = t_{A}) so gewählt wird, daß der Erregerstrom einen vorgegebenen Maximalwert (Iₘₐₓ) nicht überschreitet, und wobei
- während eines Zeitraumes, in welchem die Erregerspule (3) dauerhaft erregt ist bzw. erregt werden soll, das Freigeben und Sperren des Strompfades (15) in jeder Zeitperiode (T) wiederholt wird.

2. Verfahren nach Anspruch 1, wobei die unipolare Spannung(U_{G}) durch eine Gleichrichtereinheit in der Spannungsquelle (2) aus einer einphasigen Netzspannung des Wechselspannungsnetzes (1) derart erzeugt wird, daß der erste Zeitabschnitt (0 bis t_{A}) im wesentlichen die gesamte Wechselperiode (T_{W}) überdeckt, so daß der zweite Abschnitt (t_{A} bis T) sehr kurz ist, und wobei die Zeitperiode (T) der halben Wechselperiode (T_{W}) entspricht.

3. Verfahren nach Anspruch 1, wobei der erste und der zweite Abschnitt (0 bis t_{A}; t_{A} bis T) jeweils der halben Zeitperiode (T) sowie der halben Wechselperiode (T_{W}) entsprechen.

4. Verfahren nach einem der Ansprüche 1 bis 3, wobei der Strompfad (15) über Hauptstromelektroden eines elektronischen, über eine Steuerstrecke ein- und ausschaltbaren Einwegventils (4, 41) durch Einschalten des Einwegventils (4, 41) freigegeben und durch Ausschalten des Einwegventils (4, 41) gesperrt wird und wobei bei ausgeschaltetem Einwegventil (4, 41) ein Entladestrom aus der Erregerspule (3) durch einen parallel zur Erregerspule (3) liegenden Freipfad (7) mit einem Abkling-Zeitverlauf geführt wird, welcher im wesentlichen der Zeitkonstante (τ_{B}) der Erregerspule (3) entspricht.

5. Verfahren nach einem der Ansprüche 1 bis 4, wobei der Strompfad (15) dann freigegeben wird, wenn die unipolare Spannung (U_{G}) ausgehend von Null erstmals einen positiven Schwellenwert (U_{G0}) erreicht, der wesentlich niedriger ist als der Maximalwert (U_{Gmax}).

6. Verfahren nach einem der Ansprüche 1 bis 5, wobei der Erregerstrom gemessen und der Strompfad (15) dann gesperrt wird, wenn der Erregerstrom einen vorgegebenen ersten Schwellenhöchstwert (Iₘₐₓ) erstmals nach einer vorausgegangenen Freigabe des Strompfades (15) von niedrigeren Erregerstromwerten herkommend erreicht.

7. Verfahren nach einem der Ansprüche 1 bis 5, wobei die unipolare Spannung (U_{G}) gemessen und ein von Null ausgehender Integralwert der unipolaren Spannung (U_{G}) über den ersten Zeitabschnitt (0 bis t_{A}) gebildet wird und wobei der Strompfad (15) dann gesperrt wird, wenn der Integralwert einen vorgegebenen zweiten Schwellenhöchstwert (Fₘₐₓ) erstmals nach einer vorausgegangenen Freigabe des Strompfades (15) von niedrigeren Integralwerten herkommend erreicht, wobei der zweite Schwellenhöchstwert (Fₘₐₓ) derart vorgegeben wird, daß der Erregerstrom einen vorgegebenen Höchstwert (Iₘₐₓ) nicht überschreitet.

8. Verfahren nach einem der Ansprüche 1 bis 5, wobei die unipolare Spannung (U_{G}) gemessen und über ein Verzögerungsglied erster Ordnung ein erster gewichteter Meßwert der unipolaren Spannung (U_{G}) gebildet wird und wobei der Strompfad (15) dann gesperrt wird, wenn der erste gewichtete Meßwert einen vorgegebenen dritten Schwellenhöchstwert (Uₘₐₓ) erstmals nach einer vorausgegangenen Freigabe des Stompfads (15) von niedrigeren gewichteten Meßwerten herkommend erreicht, wobei eine Zeitkonstante des Verzögerungsglieds im wesentlichen entsprechend der Dauer des ersten Zeitabschnitts (0 bis t_{A}) eingestellt und der dritte Schwellenhöchstwert (Uₘₐₓ) so vorgegeben werden, daß der Erregerstrom einen vorgegebenen Höchstwert (Iₘₐₓ) nicht überschreitet.

9. Verfahren nach einem der Ansprüche 1 bis 5, wobei eine längs der Erregerspule (3) anstehende Spannung (U_{E}) gemessen und über ein Verzögerungsglied erster Ordnung ein gewichteter zweiter Meßwert dieser Spannung gebildet wird und wobei der Strompfad (15) dann gesperrt wird, wenn der zweite Meßwert einen vorgegebenen vierten Schwellenhöchstwert (Uₘₐₓ) erstmals nach einer vorausgegangenen Freigabe des Strompfads (15) von kleineren Werten herkommend erreicht, wobei eine Zeitkonstante des Verzögerungsglieds erster Ordnung im wesentlichen entsprechend der Zeitkonstante (τ_{B}) der Erregerspule (3) gewählt wird und vorzugsweise mindestens doppelt so lang wie die Zeitperiode (T) der unipolaren Spannung (U_{G}) ist und wobei der vierte Schwellenhöchstwert (Uₘₐₓ) derart vorgegeben wird, daß der Erregerstrom einen vorgegebenen Höchstwert (Iₘₐₓ) nicht überschreitet.

10. Verfahren nach einem der Ansprüche 6 bis 9, wobei der vorgegebene Schwellenhöchstwert (Iₘₐₓ, Fₘₐₓ, Uₘₐₓ) in Abhängigkeit von einem Betriebszustand der Bremse insbesondere in Abhängigkeit von einem Lüften und einem Halten im gelüfteten Zustand verändert wird.

11. Verfahren nach Anspruch 10, wobei der vorgegebene Schwellenhöchstwert (Iₘₐₓ, Fₘₐₓ, Uₘₐₓ) zu Beginn einer erstmaligen Bestromung beim Lüften der Bremse für ein Erhöhungszeitintervall (T_{E}) auf einen höheren Wert gesetzt wird als beim Halten.

12. Verfahren nach Anspruch 11, wobei das Erhöhungszeitintervall (T_{E}) größer oder gleich der Zeitkonstante (τ_{B}) der Erregerspule (3) ist.

13. Verfahren nach Anspruch 11, wobei das Erhöhungszeitintervall (T_{E}) mindestens doppelt so lang wie die Zeitperiode (T) der unipolaren Spannung (U_{G}) ist.

14. Verfahren nach Anspruch 4, wobei zum Schutz vor transienten Überspannungen das Einwegventil (4, 41) unabhängig von anderen Steuervorgaben immer dann eingeschaltet wird, wenn eine Spannung zwischen seinen Hauptstromelektroden bei der transienten Überspannung einen Überspannungsgrenzwert (U_{Grenz}) überschreitet, der größer ist als der betriebsmäßig vorgesehene Maximalwert (U_{Gmax}) der unipolaren Spannung (U_{G}).

15. Verfahren nach Anspruch 4, wobei das Einwegventil (4, 41) dann eingeschaltet wird, wenn an der Steuerstrecke eine positive Spannung anliegt und dann ausgeschaltet wird, wenn an der Steuerstrecke eine negative Spannung oder eine Spannung Null anliegt.

16. Verfahren nach Anspruch 15, wobei der Steuerstrecke zum Einschalten des Einwegventils (4, 41) die unipolare Spannung (U_{G}) über mindestens einen ohmschern Widerstand zugeführt und die positive Steuerspannung vorzugsweise über einen Zweipol begrenzt wird.

17. Verfahren nach einem der Ansprüche 15 oder 16, wobei die Steuerstrecke zum Ausschalten des Einwegventils (4, 41) über mindestens einen ohmschern Widerstand und einen elektronischen Schalter (161; 611; 643) kurzgeschlossen wird.

18. Verfahren nach Anspruch 11, wobei das Erhöhungszeitintervall (T_{E}) durch ein Zeitglied derart gesteuert wird, daß das Erhöhungszeitintervall (T_{E}) beginnt, wenn die unipolare Spannung (U_{G}) erstmals durch Einschalten der Netzspannung des Wechselspannungsnetzes (1) beim Lüften der Bremse einen vorgegebenen Schwellenwert (U_{GI}) erreicht, der wesentlich niedriger ist als der Maximalwert (U_{Gmax}).

19. Verfahren nach Anspruch 7, wobei der Integralwert während des zweiten Zeitabschnitts (t_{A}-T) auf Null zurückgesetzt wird.

20. Verfahren nach Anspruch 9, wobei das Verzögerungsglied erster Ordnung während einer Freigabe des Strompfads (15) mit der längs der Erregerspule (3) anstehenden Spannung (U_{G}) verbunden und während eines Sperrens des Strompfads (15) eingangsseitig über einen elektronischen Schalter kurzgeschlossen ist.

21. Schaltungsanordnung zum Betrieb einer elektromechanisch betätigbaren, mechanischen Bremse eines Elektromotors, insbesondere eines Getriebemotors an Netzspannungen eines weiten Spannungsbereichs, wobei
eine Erregerspule (3) mit Anschlußklemmen, die eine Zeitkonstante (τ_{B}) entsprechend einem Quotienten aus einer Spuleninduktivität und einem ohmschern Spulenwiderstand aufweist, zum Betätigen, insbesondere zum Lüften der Bremse, und
ein Wechselspannungsnetz (1), das eine Netzspannung mit einer Wechselperiode (T_{W}) abgibt, vongesehen sind;
**dadurch gekennzeichnet, daß**
folgende Elemente vorgesehen sind:
eine Spannungsquelle (2) zum Erzeugen einer sich mit einer Zeitperiode (T) ändernden unipolaren Spannung (U_{G}), die in einem ersten Zeitabschnitt (0 bis t_{A}) der Zeitperiode (T) positiv und von Null verschieden ist und in diesem ersten Zeitabschnitt (0 bis t_{A}) einen Maximalwert (U_{Gmax}) aufweist und in einem zweiten Zeitabschnitt (t_{A} bis T) der Zeitperiode Null ist oder mindestens gegen Null geht;
einen Strompfad (15) für einen Erregerstrom, der von der Spannungsquelle (2) zur Erregerspule (3) und zurück führt;
ein elektronisches Einwegventil (4, 41) mit Hauptstromelektroden, über die der Strompfad (15) zum Freigeben und Sperren des Strompfads (15) führt und mit einer Steuerstrecke zum Ein- und Ausschalten des Einwegventils (4, 41);
eine Steuerschaltung (6), die mit der Steuerstrecke verbunden und derart ausgebildet ist, daß das Einwegventil (4, 41) zum Freigeben des Strompfads (15) im wesentlichen zu Beginn des ersten Zeitabschnitts (0 bis t_{A}) eingeschaltet und zu einem bestimmten Zeitpunkt (t₁ = t_{A}) innerhalb des ersten Zeitabschnittes (0 bis t_{A}) zum Sperren des Strompfades (15) ausgeschaltet wird,
wobei die Steuerschaltung (6) weiterhin so ausgebildet ist, daß der Erregerstrom einen vorgegebenen Maximalwert (Iₘₐₓ) nicht überschreitet und während eines Zeitraums, in welchem die Erregerspule (3) dauerhaft erregt ist bzw. erregt werden soll, das ein Ein- und Ausschalten des Einwegventils (4, 41) zum Freigeben und Sperren des Strompfads (15) in jeder Zeitperiode (T) widerholt wird.

22. Schaltungsanordnung nach Anspruch 21, wobei die Spannungsquelle (2) eingangsseitig mit einer einphasigen Netzspannung des Wechselspannungsnetzes (1) verbunden ist und eine Dioden-Brückenschaltung (51-51''') umfaßt, so daß der erste Zeitabschnitt (0 bis t_{A}) im wesentlichen die gesamte Wechselperiode (T_{W}) umfaßt, so daß der zweite Zeitabschnitt (t_{A} bis t_{W}) sehr kurz ist und die Zeitperiode (T) im wesentlichen der halben Wechselperiode (T_{W}) entspricht.

23. Schaltungsanordnung nach Anspruch 21, wobei die Spannungsquelle (2) eine Dioden-Mittelpunktschaltung umfaßt, so daß der erste und der zweite Zeitabschnitt (0 bis t_{A}; t_{A} bis T) jeweils der halben Zeitperiode (T) sowie der halben Wechselperiode (T_{W}) entsprechen.

24. Schaltungsanordnung nach Anspruch 21, wobei parallel zu den Anschlußklemmen der Erregerspule (3) ein Freilaufpfad (7) mit einer Schaltungsanordnung zum Entladen der Erregerspule (3) nach Sperren des Strompfades (15) mit einer Entladezeitkonstanten entsprechend der Zeitkonstanten (τ_{B}) der Erregerspule (3) geschaltet ist.

25. Schaltungsanordnung nach Anspruch 21, umfassend eine Spannungsmeßeinrichtung (54) zur Abtastung der unipolaren Spannung (U_{G}) und ein Schwellenwertglied zum Vorgeben eines positiven Schwellenwerts (U_{G0}), wobei die Steuereinrichtung (6)das Einwegventil (4, 41) dann zum Freigeben des Strompfads (15) einschaltet, wenn die unipolare Spannung (U_{G}) ausgehend von Null erstmals den positiven Schwellenwert (U_{G0}) erreicht, der wesentlich niedriger ist als der Maximalwert (U_{Gmax}).

26. Schaltungsanordnung nach Anspruch 21, umfassend eine Strommeßeinrichtung (5) zum Erzeugen eines dem Erregerstrom entsprechenden Stromsignals, ein Schwellenwertglied, zum Vorgeben eines ersten Schwellenhöchstwerts (Iₘₐₓ), wobei die Steuerschaltung (6) das Einwegventil (4, 41) zum Sperren des Strompfads (15) dann ausschaltet, wenn das Stromsignal den ersten Schwellenhöchstwert (Iₘₐₓ) erstmals nach einer vorausgegangenen Freigabe des Strompfads (15) von niedrigeren Stromsignalen herkommend erreicht.

27. Schaltungsanordnung nach Anspruch 21, umfassend eine Integriereinrichtung (52) zum Bilden eines von Null ausgehenden Integralwerts der unipolaren Spannung (U_{G}) über den ersten Zeitabschnitt (0 bis t_{A}) und ein Schwellenwertglied, zum Vorgeben eines zweiten Schwellenhöchstwerts (Fₘₐₓ), der so eingestellt ist, daß der Erregerstrom einen vorgegebenen Höchstwert (Iₘₐₓ) nicht überschreitet, wobei der Steuerschaltung (6) der Integralwert und der zweite Schwellenhöchstwert (Fₘₐₓ) zugeführt werden zum Ausschalten des Einwegventils (4, 41) und zum Sperren des Strompfads (15) dann, wenn der Integralwert den zweiten Schwellenhöchstwert (Fₘₐₓ) erstmals und nach einer vorausgegangenen Freigabe des Strompfads (15) von niedrigeren Integralwerten herkommend erreicht.

28. Schaltungsanordnung nach Anspruch 21, umfassend eine Spannungsmeßeinrichtung (54) zum Abtasten der unipolaren Spannung (U_{G}) und zum Abgeben eines Spannungsmeßwerts entsprechend der unipolaren Spannung (U_{G}), ein Verzögerungsglied erster Ordnung (57) mit einer Zeitkonstanten, welche im wesentlichen der Dauer des ersten Zeitabschnitts (0 bis t_{A}) entspricht, zum Erzeugen eines gewichteten Meßwerts aus dem Spannungsmeßwert, ein Schwellenwertglied zum Vorgeben eines dritten Schwellenhöchstwertes (Uₘₐₓ), der so eingestellt ist, daß der Erregerstrom einen vorgegebenen Höchstwert (Iₘₐₓ) nicht überschreitet, wobei die Steuerschaltung (6) das Einwegventil (4, 41) dann zum Sperren des Strompfads (15) ausschaltet, wenn der gewichtete Meßwert den dritten Schwellenhöchstwert (Uₘₐₓ) erstmals nach einer vorausgegangenen Freigabe des Strompfads (15) von einem niedrigeren gewichteten Meßwert herkommend erreicht.

29. Schaltungsanordnung nach Anspruch 21, umfassend eine Spannungsmeßeinrichtung (54) zum Abtasten einer Spannung an den Anschlußklemmen der Erregerspule (3) und zum Abgeben eines entsprechenden Klemmenspannungsmeßwerts, ein Verzögerungsglied erster Ordnung (57) mit einer Zeitkonstante, die im wesentlichen der Zeitkonstanten (τ_{B}) der Erregerspule (3) entspricht und vorzugsweise mindestens doppelt so lang ist wie die Zeitperiode (T) der unipolaren Spannung (U_{G}), zum Erzeugen eines gewichteten zweiten Meßwerts aus dem Klemmenspannungsmeßwert, ein Schwellenwertglied zum Vorgeben eines vierten Schwellenhöchstwerts (Uₘₐₓ), der so eingestellt ist, daß der Erregerstrom einen vorgegebenen Höchstwert (Iₘₐₓ) nicht überschreitet, wobei die Steuerschaltung (6) das Einwegventil (4, 41) dann zum Sperren des Strompfads (15) ausschaltet, wenn der gewichtete zweite Meßwert den vierten Schwellenhöchstwert (Uₘₐₓ) erstmals nach einer vorausgegangenen Freigabe des Strompfads (15) von kleineren Werten herkommend erreicht.

30. Schaltungsanordnung nach einem der Ansprüche 26 bis 29, wobei die Steuerschaltung (6) Einrichtungen (77) zum Verändern des Schwellenhöchstwerts (Iₘₐₓ, Fₘₐₓ, Uₘₐₓ) in Abhängigkeit von einem Betriebszustand der Bremse bei einem Lüften und bei einem Halten in gelüftetem Zustand aufweist.

31. Schaltungsanordnung nach Anspruch 30, wobei die Steuerschaltung (6) ein Zeitglied (71-73; 76, 77) aufweist, um den Schwellenhöchstwert (Iₘₐₓ, Fₘₐₓ, Uₘₐₓ) zu Beginn einer erstmaligen Bestromung beim Lüften der Bremse für ein Erhöhungszeitintervall (T_{E}) auf einen höheren Wert zu setzen als beim Halten im gelüfteten Zustand.

32. Schaltungsanordnung nach Anspruch 21, umfassend eine Überspannungsschutzeinrichtung (67, 68), welche eine Spannung zwischen den Hauptstromelektroden abtastet und das Einwegventil (4, 41) zu dessen Schutz vor transienten Spannungen immer dann einschaltet, wenn die Spannung vorübergehend einen Überspannungsgrenzwert (U_{Grenz}) überschreitet, der größer ist als der betriebsmäßig vorgesehene Maximalwert (U_{Gmax}) der unipolaren Spannung (U_{G}).

33. Schaltungsanordnung nach Anspruch 21, umfassend eine Schutzeinrichtung (63), die das Einwegventil (4, 41) dann einschältet, wenn eine positive Spannung an der Steuerstrecke anliegt und dann ausschaltet, wenn eine negative Spannung oder eine Spannung Null an der Steuerstrecke anliegt.

34. Schaltungsanordnung nach Anspruch 33, umfassend mindestens einen ohmschen Widerstand zum Verbinden der Steuerstrecke mit der unipolaren Spannung (U_{G}) zum Einschalten des Einwegventils (4, 41) und ein Begrenzerzweipol, das parallel zur Steuerstrecke zum Begrenzen einer positiven Steuerspannung geschaltet ist.

35. Schaltungsanordnung nach Anspruch 33, umfassend mindestens einen ohmschen Widerstand und einen elektronischen Schalter (61, 611, 643) zum Kurzschließen der Steuerstrecke beim Ausschalten des Einwegventils (4, 41).

36. Schaltungsanordnung nach Anspruch 31, umfassend mindestens einen ohmschen Widerstand (91) zur Spannungsversorgung des Zeitglieds aus der unipolaren Spannung (U_{G}).

37. Schaltungsanordnung nach Anspruch 27, umfassend mindestens einen ohmschen Widerstand und einen Kondensator zur Bildung der Integriereinrichtung, mindestens einen ohmschen Widerstand zum Verbinden der Integriereinrichtung mit der unipolaren Spannung (U_{G}) während des ersten Zeitabschnitts (0 bis t_{A}), einen elektronischen Schalter und einen ohmschen Widerstand zum Zurücksetzen der Integriereinrichtung auf den Wert Null im zweiten Zeitabschnitt (t_{A}-T).

38. Schaltungsanordnung nach Anspruch 28, wobei das Verzögerungsglied erster Ordnung mindestens einen ohmschen Widerstand und einen Kondensator umfaßt und über mindestens einen ohmschen Widerstand mit der unipolaren Spannung (U_{G}) verbunden ist.

39. Schaltungsanordnung nach Anspruch 29, umfassend mindestens einen ohmschen Widerstand und einen Kondensator zur Bildung des Verzögerungsglieds erster Ordnung, mindestens einen ohmschen Widerstand zum Verbinden des Verzögerungsglieds erster Ordnung mit der unipolaren Spannung (U_{G}) bei freigegebenem Strompfad (15) und einen elektronischen Schalter zum eingangsseitigen Kurzschließen des Verzögerungsglieds erster Ordnung bei gesperrtem Strompfad (15).

## Claims

1. Method for operating an electromagnetically actuated mechanical brake of an electric motor, particularly a geared motor,
with an excitation coil (3) for actuating, in particular, for releasing the brake,
with an alternating voltage supply network (1) which delivers a supply voltage having an alternation period (T_{W}), the excitation coil (3) having a time constant (τ_{B}) corresponding to a quotient from a coil inductance and an ohmic coil resistance,
**characterized in that**
- for the purpose of operating the brake on supply voltages of a wide voltage range, a unipolar voltage (U_{G}) which varies with a time period (T) is generated by a voltage source (2),
- in a first time segment (0 to t_{A}) of the time period (T), the unipolar voltage (U_{G}) is positive and other than zero, and in this first time segment (0 to t_{A}) has a maximum value (U_{Gmax}) and, in a second time segment (t_{A} to T) of the time period (T) is zero or at least approaching zero,
- a current path (15) for an excitation current from the voltage source (2) to the excitation coil (3) is released substantially at the beginning of the first time segment (0 to t_{A}),
- the current path (15) is blocked again at a given instant (t₁ = t_{A}) within the first time segment (0 to t_{A}), the certain instant (t₁ = t_{A}) being selected so that the excitation current does not exceed a predefined maximum value (Iₘₐₓ), and
- the releasing and blocking of the current path (15) being repeated in each time period (T) during a time interval in which the excitation coil (3) is permanently energized or is to be energized.

2. Method according to claim 1, the unipolar voltage (U_{G}) being generated from a single-phase supply voltage of the alternating voltage supply network (1) by a rectifier unit in the voltage source (2) in such a way that the first time segment (0 to t_{A}) substantially covers the entire alternation period (T_{W}), so that the second segment (t_{A} to T) is very short, and the time period (T) corresponding to half the alternation period (T_{W}).

3. Method according to claim 1, the first and the second segment (0 to t_{A}; t_{A} to T) each corresponding to half the time period (T) and to half the alternation period (T_{W}).

4. Method according to one of claims 1 to 3, the current path (15), via primary-current electrodes of an electronic one-way valve (4, 41) which can be switched on and off via a controlled system, being released through switching on of the one-way valve (4, 41) and blocked through switching off of the one-way valve (4, 41) and, when the one-way valve (4, 41) is switched off, a discharging current being carried out of the excitation coil (3), through a free path (7) lying parallel to the excitation coil (3), with a decay time characteristic which corresponds substantially to the time constant (τ_{B}) of the excitation coil (3).

5. Method according to one of claims 1 to 4, the current path (15) being released when the unipolar voltage (U_{G}), starting from zero, attains for the first time a positive threshold value (U_{G0}) which is substantially lower than the maximum value (U_{Gmax}).

6. Method according to one of claims 1 to 5, the excitation current being measured and the current path (15) being blocked when the excitation current, coming from lower excitation current values, attains a predefined first threshold maximum value (Iₘₐₓ) for the first time following a previous release of the current path (15).

7. Method according to one of claims 1 to 5, the unipolar voltage (U_{G}) being measured and an integral value of the unipolar voltage (U_{G}) being formed, starting from zero, over the first time segment (0 to t_{A}), and the current path (15) being blocked when the integral value, coming from lower integral values, attains a predefined second threshold maximum value (Fₘₐₓ) for the first time following a previous release of the current path (15), the second threshold maximum value (Fₘₐₓ) being predefined in such a way that the excitation current does not exceed a predefined maximum value (Iₘₐₓ).

8. Method according to one of claims 1 to 5, the unipolar voltage (U_{G}) being measured and a first weighted measurement value of the unipolar voltage (U_{G}) being formed via a first-order delay element, and the current path (15) being blocked when the first weighted measurement value, coming from lower weighted measurement values, attains a predefined third threshold maximum value (Uₘₐₓ) for the first time following a previous release of the current path (15), a time constant of the delay element being set, corresponding substantially to the duration of the first time segment (0 to t_{A}), and the third threshold maximum value (Uₘₐₓ) being predefined so that the excitation current does not exceed a predefined maximum value (Iₘₐₓ).

9. Method according to one of claims 1 to 5, a voltage (U_{E}) present alongside the excitation coil (3) being measured and a weighted second measurement value of this voltage being formed via a first-order delay element, and the current path (15) being blocked when the second measurement value, coming from lower values, attains a predefined fourth threshold maximum value (Uₘₐₓ) for the first time following a previous release of the current path (15), a time constant of the first-order delay element being selected, corresponding substantially to the time constant (τ_{B}) of the excitation coil (3) and preferably being twice as long as the time period (T) of the unipolar voltage (U_{G}), and the fourth threshold maximum value (Uₘₐₓ) being predefined in such a way that the excitation current does not exceed a predefined maximum value (Iₘₐₓ).

10. Method according to one of claims 6 to 9, the predefined threshold maximum value (Iₘₐₓ, Fₘₐₓ, Uₘₐₓ) being varied in dependence on an operating state of the brake, in particular, in dependence on a lifting and a holding in the lifted state.

11. Method according to claim 10, the predefined threshold maximum value (Iₘₐₓ, Fₘₐₓ, Uₘₐₓ) being set, at the beginning of a first-time current flow, to a higher value, for an increase time interval (T_{E}), in lifting of the brake than in holding.

12. Method according to claim 11, the increase time interval (T_{E}) being greater than or equal to the time constant (τ_{B}) of the excitation coil (3).

13. Method according to claim 11, the increase time interval (T_{E}) being at least twice as long as the time period (T) of the unipolar voltage (U_{G}).

14. Method according to claim 4, the one-way valve (4, 41) always being switched on, irrespective of other control predefinitions, for the purpose of protection against transient overvoltages, when, in the transient overvoltage, a voltage between its primary current electrodes exceeds an overvoltage limiting value (U_{Grenz}) that is greater than the maximum value (U_{Gmax}) of the unipolar voltage (U_{G}) designated for operation.

15. Method according to claim 4, the one-way valve (4, 41) being switched on when a positive voltage is present at the controlled system and switched off when a negative voltage or a zero voltage is present at the controlled system.

16. Method according to claim 15, the controlled system, for the purpose of switching on the one-way valve (4, 41), supplying the unipolar voltage (U_{G}) via at least one ohmic resistance and the positive control voltage preferably being limited via a two-terminal network.

17. Method according to one of claims 15 and 16, the controlled system, for the purpose of switching off the one-way valve (4, 41), being short-circuited via at least one ohmic resistance and an electronic switch (161; 611; 643).

18. Method according to claim 11, the increase time interval (T_{E}) being controlled by a time element in such a way that the increase time interval (T_{E}) commences when the unipolar voltage (U_{G}) attains for the first time, through switching on the supply voltage of the alternating voltage supply network (1) in lifting the brake, a predefined threshold value (U_{GI}) which is substantially lower than the maximum value (U_{Gmax}).

19. Method according to claim 7, the integral value being reset to zero during the second time segment (t_{A}-T).

20. Method according to claim 9, the first-order delay element being connected, during a release of the current path (15), to voltage (U_{G}) present alongside the excitation coil (3) and being short-circuited on the input side, via an electronic switch, during a blocking of the current path (15).

21. Circuit arrangement for operating an electromagnetically actuated mechanical brake of an electric motor, particularly a geared motor, on supply voltages of a wide voltage range, there being provided
an excitation coil (3), with connecting terminals, which has a time constant (τ_{B}), corresponding to a quotient from a coil inductance and an ohmic coil resistance, for actuating, in particular, for releasing the brake, and
an alternating voltage supply network (1) which delivers a supply voltage having an alternation period (T_{w}) ;
**characterized in that** the following elements are provided:
a voltage source (2) for generating a unipolar voltage (U_{G}) which varies with a time period (T) and which in a first time segment (0 to t_{A}) of the time period (T) is positive and other than zero, and in this first time segment (0 to t_{A}) has a maximum value (U_{Gmax}) and in a second time segment (t_{A} to T) of the time period is zero or at least approaching zero;
a current path (15), leading from the voltage source (2) to the excitation coil (3) and back, for an excitation current;
an electronic one-way valve (4, 41) with primary-current electrodes via which the current path (15) leads for the purpose of releasing and blocking the current path (15) and with a controlled system for switching on and off the one-way valve (4, 41);
a control circuit (6) which is connected to the controlled system and of such design that the one-way valve (4, 41) is switched on substantially at the beginning of the first time segment (0 to t_{A}) for the purpose of releasing the current path (15), and is switched off at a certain instant (t₁ = t_{A}) within the first time segment (0 to t_{A}) for the purpose of blocking the current path (15),
the control circuit (6) furthermore being of such design that the excitation current does not exceed a predefined maximum value (Iₘₐₓ) and the switching on and off of the one-way valve (4, 41) for the purpose of releasing and blocking the current path (15) being repeated in each time period (T) during a time interval in which the excitation coil (3) is permanently energized or is to be energized.

22. Circuit arrangement according to claim 21, the voltage source (2) being connected on the input side to a single-phase supply voltage of the alternating voltage supply network (1) and comprising a diode bridge connection (51-51'''), so that the first time segment (0 to t_{A}) comprises substantially the entire alternation period (T_{W}), so that the second time segment (t_{A} to t_{W}) is very short and the time period (T) corresponds substantially to half the alternation period (T_{W}).

23. Circuit arrangement according to claim 21, the voltage source (2) comprising a diode midpoint connection, so that the first and the second time segments (0 to t_{A}; t_{A} to T) each correspond to half the time period (T) and to half the alternation period (T_{W}).

24. Circuit arrangement according to claim 21, there being connected in parallel to the connecting terminals of the excitation coil (3) a free-running path (7) with a circuit arrangement for discharging the excitation coil (3) following blocking of the current path (15), with a discharge time constant corresponding to the time constant (τ_{B}) of the excitation coil (3).

25. Circuit arrangement according to claim 21, comprising a voltage measuring device (54) for sampling the unipolar voltage (U_{G}) and a threshold value element for predefining a positive threshold value (U_{G0}), the control device (6) switching on the one-way valve (4, 41) for the purpose of releasing the current path (15) when the unipolar voltage (U_{G}), starting from zero, attains for the first time the positive threshold value (U_{G0}) which is substantially lower than the maximum value (U_{Gmax}).

26. Circuit arrangement according to claim 21, comprising a current measuring device (5) for generating a current signal corresponding to the excitation current, and a threshold value element for defining a first threshold maximum value (Iₘₐₓ), the control circuit (6) switching off the one-way valve (4, 41) for the purpose of blocking the current path (15) when the current signal, coming from lower current signals, attains the first threshold maximum value (Iₘₐₓ) for the first time following a previous release of the current path (15).

27. Circuit arrangement according to claim 21, comprising an integrating device (52) for forming an integral value of the unipolar voltage (U_{G}), starting from zero, over the first time segment (0 to t_{A}), and a threshold value element, for defining a second threshold maximum value (Fₘₐₓ), which is set so that the excitation current does not exceed a predefined maximum value (Iₘₐₓ), the integral value and the second threshold maximum value (Fₘₐₓ) being supplied to the control circuit (6) for the purpose of switching off the one-way valve (4, 41) and blocking the current path (15) when the integral value, coming from lower integral values, attains the second threshold maximum value (Fₘₐₓ) for the first time following a previous release of the current path (15).

28. Circuit arrangement according to claim 21, comprising a voltage measuring device (54) for sampling the unipolar voltage (U_{G}) and for delivering a voltage measurement value corresponding to the unipolar voltage (U_{G}), a first-order delay element (57) with a time constant, which corresponds substantially to the duration of the first time segment (0 to t_{A}), for generating a weighted measurement value from the voltage measurement value, a threshold value element, for defining a third threshold maximum value (Uₘₐₓ), which is set so that the excitation current does not exceed a predefined maximum value (Iₘₐₓ), the control circuit (6) switching off the one-way valve (4, 41) for the purpose of blocking the current path (15) when the weighted measurement value, coming from a lower weighted measurement value, attains the third threshold maximum value (Uₘₐₓ) for the first time following a previous release of the current path (15).

29. Circuit arrangement according to claim 21, comprising a voltage measuring device (54) for sampling a voltage at the connecting terminals of the excitation coil (3) and for delivering a corresponding terminal voltage measurement value, a first-order delay element (57), with a time constant which corresponds substantially to the time constant (τ_{B}) of the excitation coil (3) and is preferably at least twice as long as the time period (T) of the unipolar voltage (U_{G}), for generating a weighted second measurement value from the terminal voltage measurement value, a threshold value element, for defining a fourth threshold maximum value (Uₘₐₓ), which is set so that the excitation current does not exceed a predefined maximum value (Iₘₐₓ), the control circuit (6) switching off the one-way valve (4, 41) for the purpose of blocking the current path (15) when the weighted second measurement value, coming from lower values, attains the fourth threshold maximum value (Uₘₐₓ) for the first time following a previous release of the current path (15).

30. Circuit arrangement according to one of claims 26 to 29, the control circuit (6) having devices (77) for varying the threshold maximum value (Iₘₐₓ, Fₘₐₓ, Uₘₐₓ) in dependence on an operating state of the brake in a lifting and in a holding in the lifted state.

31. Circuit arrangement according to claim 30, the control circuit (6) having a time element (71-73; 76, 77) in order to set the threshold maximum value (Iₘₐₓ, Fₘₐₓ, Uₘₐₓ) at the beginning of a first-time current flow to a higher value, for an increase time interval (T_{E}), in lifting of the brake than in holding in the lifted state.

32. Circuit arrangement according to claim 21, comprising an overvoltage protection device (67, 68) which samples a voltage between the primary current electrodes and always switches on the one-way valve (4, 41), for the purpose of protecting it against transient voltages, when the voltage temporarily exceeds an overvoltage limiting value (U_{Grenz}) that is greater than the maximum value (U_{Gmax}) of the unipolar voltage (U_{G}) designated for operation.

33. Circuit arrangement according to claim 21, comprising a protection device (63) which switches on the one-way valve (4, 41) when a positive voltage is present at the controlled system and switches it off when a negative voltage or a zero voltage is present at the controlled system.

34. Circuit arrangement according to claim 33, comprising at least one ohmic resistance, for connecting the controlled system to the unipolar voltage (U_{G}) for the purpose of switching on the one-way valve (4, 41), and a limiter two-terminal network which is connected in parallel to the controlled system for the purpose of limiting a positive control voltage.

35. Circuit arrangement according to claim 33, comprising at least one ohmic resistance and an electronic switch (61, 611, 643) for short-circuiting the controlled system in switching off the one-way valve (4, 41).

36. Circuit arrangement according to claim 31, comprising at least one ohmic resistance (91) for supplying voltage to the time element from the unipolar voltage (U_{G}).

37. Circuit arrangement according to claim 27, comprising at least one ohmic resistance and a capacitor in order to form the integrating device, at least one ohmic resistance for connecting the integrating device to the unipolar voltage (U_{G}) during the first time segment (0 to t_{A}), an electronic switch and an ohmic resistance for resetting the integrating device to the value zero in the second time segment (t_{A}-T).

38. Circuit arrangement according to claim 28, the first-order delay element comprising at least one ohmic resistance and a capacitor and being connected to the unipolar voltage (U_{G}) via at least one ohmic resistance.

39. Circuit arrangement according to claim 29, comprising at least one ohmic resistance and a capacitor in order to form the first-order delay element, at least one ohmic resistance for connecting the first-order delay element to the unipolar voltage (U_{G}) when the current path (15) is released, and an electronic switch for short-circuiting the first-order delay element on the input side when the current path (15) is blocked.

## Revendications

1. Procédé pour la mise en oeuvre d'un frein mécanique d'un moteur électrique, en particulier d'un moto-réducteur, à actionnement électromagnétique, avec une bobine d'excitation (3) pour l'actionnement, en particulier pour le déblocage du frein, et avec un réseau à courant alternatif (1) qui fournit une tension de réseau avec une période d'alternance (T_{W}), la bobine d'excitation (3) ayant une constante de temps (τB) qui correspond à un quotient tiré d'une inductance de la bobine et de la résistance ohmique de la bobine, **caractérisé**
- **en ce que** pour utiliser le frein avec des tensions de secteur ayant une large plage de tensions, une tension unipolaire (U_{G}) qui change selon une période de temps (T) est produite par une source de tension (2),
- **en ce que** la tension unipolaire (U_{G}) est positive et est différente de zéro dans un premier intervalle de temps (0 à t_{A}) de la période de temps (T) et comprend une valeur maximale (U_{Gmax}) dans ce premier intervalle de temps (0 à t_{A}) alors qu'elle est égale à zéro ou va au moins vers zéro dans un deuxième intervalle de temps (t_{A} à T) de la période de temps (T),
- **en ce qu'**un trajet de courant (15) pour un courant d'excitation s'étendant depuis la source de tension (2) jusqu'à la bobine d'excitation (3) est libéré sensiblement au début du premier intervalle de temps (0 à t_{A}),
- **en ce qu'**à un moment déterminé (t₁ = t_{A}) à l'intérieur du premier intervalle de temps (0 à t_{A}) le trajet de courant (15) est à nouveau bloqué, ce moment déterminé (t₁ = t_{A}) étant choisi de telle façon que le courant d'excitation ne dépasse pas une valeur maximale imposée (Iₘₐₓ) et
- **en ce que** pendant une période au cours de laquelle la bobine d'excitation (3) est excitée ou doit être excitée en permanence, la libération ou le blocage du trajet de courant (15) est répété lors de chaque période de temps (T).

2. Procédé selon la revendication 1, **caractérisé en ce que** la tension unipolaire (U_{G}) est générée par une unité à redresseurs située dans la source de tension (2) et à partir d'une tension de réseau monophasée du réseau à tension alternative (1), de telle manière que le premier intervalle de temps (0 à t_{A}) recouvre sensiblement l'ensemble de la période d'alternance (t_{W}), de sorte que le deuxième intervalle (t_{A} à T) est très court, et **en ce que** la période de temps (T) correspond à la moitié de la période d'alternance (T_{W}).

3. Procédé selon la revendication 1, **caractérisé en ce que** le premier et le deuxième intervalles (0 à t_{A} ; t_{A} à T) correspondent respectivement à la demi-période de temps (T) ainsi qu'à la demi-période d'alternance (Tw).

4. Procédé selon l'une quelconque des revendications 1 à 3, **caractérisé en ce que** le trajet de courant (15) est libéré à l'aide d'électrodes de courant principal d'une valve unidirectionnelle électronique (4, 41) dont la mise en action et l'arrêt se font par un trajet de commande de mise en circuit de cette valve unidirectionnelle (4, 41), et est bloqué par l'arrêt de la valve unidirectionnelle (4, 41) et **en ce que**, lorsque la valve unidirectionnelle (4, 41) est arrêtée, un courant de décharge sort de la bobine d'excitation (3) à travers un trajet de «roue libre» (7) mis en parallèle sur la bobine d'excitation (3), et ceci avec une courbe de temps de décroissance correspondant sensiblement à la constante de temps (τ_{B}) de la bobine d'excitation (3).

5. Procédé selon l'une quelconque des revendications 1 à 4, **caractérisé en ce que** le trajet de courant (15) est libéré lorsqu'en partant de zéro, la tension unipolaire U_{G} atteint pour la première fois une valeur de seuil positive (U_{GO}) qui est nettement inférieure à la valeur maximale (U_{Gmax}).

6. Procédé selon l'une quelconque des revendications 1 à 5, **caractérisé en ce que** le courant d'excitation est mesuré et le trajet de courant (15) est bloqué lorsqu'à partir de valeurs de courant d'excitation plus faibles, le courant d'excitation atteint pour la première fois une première valeur maximale de seuil imposée (Iₘₐₓ) après une libération antérieure du trajet de courant (15).

7. Procédé selon l'une quelconque des revendications 1 à 5, **caractérisé en ce que** la tension unipolaire (U_{G}) est mesurée et une valeur intégrale de la tension unipolaire (U_{G}) partant de zéro est formée sur le premier intervalle de temps (0 à t_{A}), et **en ce que** le trajet de courant (15) est bloqué lorsqu'à partir de valeurs intégrales plus faibles, la valeur intégrale atteint pour la première fois une deuxième valeur maximale de seuil imposée (Fₘₐₓ) après une libération antérieure du trajet de courant (15), alors que la deuxième valeur maximale de seuil (Fₘₐₓ) est imposée de telle manière que le courant d'excitation ne dépasse pas une valeur maximale imposée (Iₘₐₓ).

8. Procédé selon l'une quelconque des revendications 1 à 5, **caractérisé en ce que** la tension unipolaire (U_{G}) est mesurée et une première valeur de mesure pondérée de la tension unipolaire (U_{G}) est formée à l'aide d'un élément de temporisation de premier ordre, et **en ce que** le trajet de courant (15) est bloqué lorsqu'à partir de valeurs de mesure pondérées plus faibles, la première valeur de mesure pondérée atteint pour la première fois une troisième valeur maximale de seuil imposée (Uₘₐₓ) après une libération antérieure du trajet de courant (15), alors qu'une constante de temps de l'élément de temporisation est sensiblement réglée de telle manière en fonction de la durée du premier intervalle de temps (0 à t_{A}) et que la troisième valeur maximale de seuil (Uₘₐₓ) est imposée de telle manière que le courant d'excitation ne dépasse pas une valeur maximale imposée (Iₘₐₓ).

9. Procédé selon l'une quelconque des revendications 1 à 5, **caractérisé en ce qu'**une tension (U_{E}) existant le long de la bobine d'excitation (3) est mesurée, et qu'une deuxième valeur de mesure pondérée de cette tension est formée à l'aide d'un élément de temporisation de premier ordre, et **en ce que** le trajet de courant (15) est bloqué lorsqu'à partir de valeurs plus faibles, la deuxième valeur de mesure atteint pour la première fois une quatrième valeur maximale de seuil imposée (Uₘₐₓ) après une libération antérieure du trajet de courant (15), alors qu'une constante de temps de l'élément de temporisation de premier ordre est choisie sensiblement en fonction de la constante de temps (τ_{B}) de la bobine d'excitation (3) et a de préférence au moins une longueur double de celle de la période de temps (T) de la tension unipolaire (U_{G}), et que la quatrième valeur maximale de seuil (Uₘₐₓ) est imposée de telle manière que le courant d'excitation ne dépasse pas une valeur maximale imposée (Iₘₐₓ).

10. Procédé selon l'une quelconque des revendications 6 à 9, **caractérisé en ce que** la valeur maximale de seuil imposée (Iₘₐₓ, Fₘₐₓ, Uₘₐₓ) est modifiée en fonction d'un état de fonctionnement du frein, en particulier en fonction d'un déblocage et d'un maintien en état de déblocage.

11. Procédé selon la revendication 10, **caractérisé en ce qu'**au début d'une première mise sous tension lors du déblocage du frein, la valeur maximale de seuil imposée (Iₘₐₓ, Fₘₐₓ, Uₘₐₓ) est placée pour un intervalle de temps d'accroissement (T_{E}) à une valeur plus élevée que lors du maintien.

12. Procédé selon la revendication 11, **caractérisé en ce que** l'intervalle de temps d'accroissement (T_{E}) est supérieur ou égal à la constante de temps (τ_{B}) de la bobine d'excitation (3).

13. Procédé selon la revendication 11, **caractérisé en ce que** l'intervalle de temps d'accroissement (T_{E}) a une longueur qui est au moins le double de la période de temps (T) de la tension unipolaire (U_{G}).

14. Procédé selon la revendication 4, **caractérisé en ce que**, pour la protection contre les surtensions transitoires, la valve unidirectionnelle (4, 41) est toujours mise en action indépendamment d'autres consignes de commande lorsqu'une tension dépasse entre ses électrodes de courant principal, à la surtension transitoire, une valeur limite de surtension (U_{Grenz}) qui est plus importante que la valeur maximale (U_{Gmax}) de la tension unipolaire (U_{G}) prévue pour le fonctionnement

15. Procédé selon la revendication 4, **caractérisé en ce que** la valve unidirectionnelle (4, 41) est mise en action lorsqu'une tension positive est présente sur le trajet de commande et est arrêtée lorsqu'une tension négative ou égale à zéro est présente sur le trajet de commande.

16. Procédé selon la revendication 15, **caractérisé en ce que** la tension unipolaire (U_{G}) est amenée au trajet de commande pour la mise en action de la valve unidirectionnelle (4, 41) par au moins une résistance ohmique et **en ce que** la tension de commande positive est de préférence limitée par un dipôle.

17. Procédé selon l'une quelconque des revendications 15 ou 16, **caractérisé en ce que** le trajet de commande est, pour l'arrêt de la valve unidirectionnelle (4, 41), court-circuité à l'aide d'au moins une résistance ohmique et d'un commutateur électronique (161 ; 611 ; 643).

18. Procédé selon la revendication 11, **caractérisé en ce que** l'intervalle de temps d'accroissement (T_{E}) est commandé de telle manière par un relais de temporisation qu'il débute lorsque la tension unipolaire (U_{G}) atteint pour la première fois, du fait de la mise en action de la tension du réseau à courant alternatif (1) lors du déblocage du frein, une valeur de seuil imposée (U_{GI}) qui est nettement plus basse que la valeur maximale (U_{Gmax}).

19. Procédé selon la revendication 7, **caractérisé en ce que** la valeur intégrale est ramenée à zéro lors du deuxième intervalle de temps (t_{A}-T).

20. Procédé selon la revendication 9, **caractérisé en ce que** l'élément de temporisation de premier ordre est relié, lors de la libération du trajet de courant (15), à la tension (U_{G}) existant le long de la bobine d'excitation (3), et est court-circuité du côté de l'entrée à l'aide d'un commutateur électronique lors d'un blocage du trajet de courant (15).

21. Montage pour la mise en oeuvre d'un frein mécanique d'un moteur électrique, en particulier d'un moto-réducteur, à actionnement électromagnétique, avec des tensions de réseau avec une large plage de tensions, alors qu'il est prévu
une bobine d'excitation (3) avec des bornes de raccordement qui, pour actionner et en particulier pour débloquer le frein, possède une constante de temps (τ_{B}) correspondant à un quotient tiré d'une inductance de bobine et d'une résistance ohmique de bobine et
un réseau de tension alternative (1) qui fournit une tension de réseau ayant une période d'alternance (T_{W}),
**caractérisé en ce que** les éléments suivants sont prévus :
une source de tension (2) pour fournir une tension unipolaire (U_{G}) changeant avec une période de temps (T), qui est positive et différente de zéro dans un premier intervalle de temps (0 à t_{A}) de la période de temps (T) en comprenant une valeur maximale (U_{Gmax}) lors de ce premier intervalle de temps (0 à t_{A}), et qui est égale à zéro ou qui tend au moins vers zéro dans un deuxième intervalle de temps (t_{A} à T) de la période de temps ;
un trajet de courant (15) pour un courant d'excitation qui conduit de la source de tension (2) vers la bobine d'excitation (3) et dans le sens du retour ;
une valve unidirectionnelle électronique (4, 41) avec des électrodes de courant principal par lesquelles passe le trajet de courant (15) pour sa libération et pour son blocage, et avec un trajet de commande pour la mise en action et l'arrêt de la valve unidirectionnelle (4, 41) ;
un circuit de commande (6) qui est relié au trajet de commande et qui est conçu de telle façon que la valve unidirectionnelle (4, 41) soit mise en action sensiblement au début du premier intervalle de temps (0 à t_{A}) pour libérer le trajet de courant (15), et soit arrêtée à un moment déterminé (t1 = t_{A}) à l'intérieur du premier intervalle de temps (0 à t_{A}) pour bloquer le trajet de courant (15),
le circuit de commande (6) étant par ailleurs conçu de telle manière que le courant d'excitation ne dépasse pas une valeur maximale imposée (Iₘₐₓ) et que, lors d'une période pendant laquelle la bobine d'excitation (3) est excitée ou doit être excitée en permanence, la mise en action et l'arrêt de la valve unidirectionnelle (4, 41) soient répétés lors de chaque période de temps (T) pour libérer et pour bloquer le trajet de courant (15).

22. Montage selon la revendication 21, **caractérisé en ce que** la source de tension (2) est reliée à son entrée avec une tension monophasée du réseau de tension alternative (1) et comprend un circuit en pont à diodes (51-51'''), de sorte que le premier intervalle de temps (0 à t_{A}) comprend sensiblement l'ensemble de la période d'alternance (T_{W}), le deuxième intervalle de temps (t_{A à} t_{W}) étant très court, et la période de temps (T) correspondant sensiblement à la demi-période d'alternance (T_{W}).

23. Montage selon la revendication 21, **caractérisé en ce que** la'source de tension (2) comprend un circuit à point central à diodes, de sorte que le premier et le deuxième intervalles de temps (0 à t_{A} ; t_{A à} T) correspondent respectivement à la première demi-période de temps (T) ainsi qu'à la demi-période d'alternance (T_{W}).

24. Montage selon la revendication 21, **caractérisé en ce qu'**il est placé, en parallèle sur les bornes de raccordement de la bobine d'excitation (3), un trajet de «roue libre» (7) avec un montage pour décharger la bobine d'excitation (3) après le blocage du trajet de courant (15) et avec une constante de temps de décharge, qui correspond à la constante de temps (τ_{B}) de la bobine d'excitation (3).

25. Montage selon la revendication 21, comprenant un dispositif de mesure de la tension (54) pour détecter la tension unipolaire (U_{G}) et un élément de valeur de seuil pour imposer une valeur de seuil positive (U_{GO}), le dispositif de commande (6) mettant en action la valve unidirectionnelle (4, 41) pour libérer le trajet de courant (15) lorsqu'en partant de zéro, la tension unipolaire (U_{G}) atteint pour la première fois la valeur de seuil positive (U_{GO}) qui est nettement plus faible que la valeur maximale (U_{Gmax}).

26. Montage selon la revendication 21, comprenant un dispositif de mesure du courant (5) pour générer un signal de courant correspondant au courant d'excitation et un élément de valeur de seuil pour imposer une première valeur maximale de seuil (Iₘₐₓ), le circuit de commande (6) arrêtant la valve unidirectionnelle (4, 41) pour bloquer le trajet de courant (15) lorsqu'à partir de signaux de courant plus faibles, le signal de courant atteint pour la première fois la première valeur maximale de seuil (Iₘₐₓ) après une libération antérieure du trajet de courant (15).

27. Montage selon la revendication 21, comprenant un dispositif d'intégration (52) pour former, sur le premier intervalle de temps (0 à t_{A}), une valeur intégrale partant de zéro de la tension unipolaire (U_{G}) et un élément de valeur de seuil pour imposer une deuxième valeur maximale de seuil (Fₘₐₓ) qui est ajustée de telle façon que le courant d'excitation ne dépasse pas une valeur maximale imposée (Iₘₐₓ), la valeur intégrale et la deuxième valeur maximale de seuil (Fₘₐₓ) étant amenées au circuit de commande (6) pour arrêter la valve unidirectionnelle (4, 41) et pour bloquer le trajet de courant (15) lorsqu'en partant de valeurs intégrales plus faibles, la valeur intégrale atteint pour la première fois la deuxième valeur maximale de seuil (Fₘₐₓ) après une libération antérieure du trajet de courant (15).

28. Montage selon la revendication 21, comprenant un dispositif de mesure de la tension (54) pour détecter la tension unipolaire (U_{G}) et pour fournir une valeur de mesure de la tension en fonction de la tension unipolaire (U_{G}), un élément de temporisation de premier ordre (57) avec une constante de temps correspondant sensiblement à la durée du premier intervalle de temps (0 à t_{A}) pour générer une valeur de mesure pondérée à partir de la valeur de mesure de la tension et un élément de valeur de seuil pour imposer une troisième valeur maximale de seuil (Uₘₐₓ) qui est ajustée de telle façon que le courant d'excitation ne dépasse pas une valeur maximale imposée (Iₘₐₓ), le circuit de commande (6) arrêtant la valve unidirectionnelle (4, 41) pour bloquer le trajet de courant (15) lorsqu'en provenance d'une valeur de mesure pondérée plus faible, la valeur de mesure pondérée atteint pour la première fois la troisième valeur maximale de seuil (Uₘₐₓ) après une libération antérieure du trajet de courant (15).

29. Montage selon la revendication 21, comprenant un dispositif de mesure de la tension (54) pour détecter une tension sur les bornes de raccordement de la bobine d'excitation (3) et pour fournir une valeur de mesure correspondante de la tension aux bornes, un élément de temporisation de premier ordre (57) avec une constante de temps correspondant sensiblement à la constante de temps (τ_{B}) de la bobine d'excitation (3) et dont la longueur est de préférence le double de la période de temps (T) de la tension unipolaire (U_{G}) pour générer une deuxième valeur de mesure pondérée à partir de la valeur de mesure de la tension aux bornes et un élément de valeur de seuil pour imposer une quatrième valeur maximale de seuil (Uₘₐₓ) qui est ajustée de telle façon que le courant d'excitation ne dépasse pas une valeur maximale imposée (Iₘₐₓ), le circuit de commande (6) arrêtant la valve unidirectionnelle (4, 41) pour bloquer le trajet de courant (15) lorsqu'à partir de valeurs plus faibles, la deuxième valeur de mesure pondérée atteint pour la première fois la quatrième valeur maximale de seuil (Uₘₐₓ) après une libération antérieure du trajet de courant (15).

30. Montage selon l'une quelconque des revendications 26 à 29, **caractérisé en ce que** le circuit de commande (6) comprend des dispositifs (77) pour modifier la valeur maximale de seuil (Iₘₐₓ, Fₘₐₓ, Uₘₐₓ) en fonction d'un état de fonctionnement du frein dans le cas d'un déblocage et d'un maintien dans l'état débloqué.

31. Montage selon la revendication 30, **caractérisé en ce que** le circuit de commande (6) comprend un relais de temporisation (71-73 ; 76, 77) pour, au début d'une première mise sous tension lors du déblocage du frein, placer la valeur maximale de seuil (Iₘₐₓ, Fₘₐₓ, Uₘₐₓ) pour un intervalle de temps d'accroissement (T_{E}) à une valeur plus élevée que lors du maintien dans l'état débloqué.

32. Montage selon la revendication 21, comprenant un dispositif de protection contre les surtensions (67 68) qui lit une tension entre les électrodes de courant principal et qui, pour la protéger contre les tensions transitoires, met en route la valve unidirectionnelle (4, 41) à chaque fois que la tension dépasse momentanément une valeur limite de surtension (U_{Grenz}) qui est supérieure à la valeur maximale (U_{Gmax}) de la tension unipolaire (U_{G}) prévue pour le fonctionnement.

33. Montage selon la revendication 21, comprenant un dispositif de protection (63) qui met en action la valve unidirectionnelle (4, 41) lorsqu'une tension positive est présente sur le trajet de commande et qui l'arrête lorsqu'une tension négative ou une tension égale à zéro est présente sur le trajet de commande.

34. Montage selon la revendication 33, comprenant au moins une résistance ohmique pour assurer la liaison du trajet de commande avec la tension unipolaire (U_{G}) pour mettre en action la valve unidirectionnelle (4, 41) et un dipôle de limitation qui est branché en parallèle sur le trajet de commande pour limiter une tension de commande positive.

35. Montage selon la revendication 33, comprenant au moins une résistance ohmique et un commutateur électronique (61, 611, 643) pour court-circuiter le trajet de commande lors de l'arrêt de la valve unidirectionnelle (4, 41).

36. Montage selon la revendication 31, comprenant au moins une résistance ohmique (91) pour assurer l'alimentation en tension du relais de temporisation à partir de la tension unipolaire (U_{G}).

37. Montage selon la revendication 27, comprenant au moins une résistance ohmique et un condensateur pour former le dispositif d'intégration, au moins une résistance ohmique pour assurer la liaison du dispositif d'intégration avec la tension unipolaire (U_{G}) lors du premier intervalle de temps (0 à t_{A}), un commutateur électronique et une résistance ohmique pour remettre le dispositif d'intégration à la valeur zéro lors du deuxième intervalle de temps (t_{A}-T).

38. Montage selon la revendication 28, **caractérisé en ce que** l'élément de temporisation de premier ordre comprend au moins une résistance ohmique et un condensateur et est relié par au moins une résistance ohmique à la tension unipolaire (U_{G}).

39. Montage selon la revendication 29, comprenant au moins une résistance ohmique et un condensateur pour former l'élément de temporisation de premier ordre, au moins une résistance ohmique pour relier l'élément de temporisation de premier ordre à la tension unipolaire (U_{G}) lorsque le trajet de courant (15) est libéré et un commutateur électronique pour une mise en court-circuit de l'entrée de l'élément de temporisation de premier ordre lorsque le trajet de courant (15) est bloqué.
